(19)

Europäisches Patentamt

European Patent Office

Office européen des brevets

(11) **EP 4 575 843 A1**

(12) **EUROPEAN PATENT APPLICATION**

(43) Date of publication:
**25.06.2025 Bulletin 2025/26**

(21) Application number: **23383328.4**

(22) Date of filing: **20.12.2023**

(51) International Patent Classification (IPC):
*G06F 17/12* (2006.01)  *G06F 17/16* (2006.01)
*G06N 5/01* (2023.01)  *G06N 10/20* (2022.01)
*G06N 10/60* (2022.01)

(52) Cooperative Patent Classification (CPC):
**G06F 17/11; G06N 5/01; G06N 10/20; G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Multiverse Computing S.L.**
**20014 Donostia-San Sebastian (ES)**

(72) Inventors:
• ORÚS, Roman
  **20014 Donostia / San Sebastián (ES)**
• SAHIN, Serkan
  **20014 Donostia / San Sebastián (ES)**

(74) Representative: **Balder IP Law, S.L.**
**Paseo de la Castellana 93**
**5ª planta**
**28046 Madrid (ES)**

(54) **SYSTEM AND METHOD FOR SYMMETRIC TENSOR NETWORK AND ADAPTIVE TROTTER DELTA FOR OPTIMIZATION**

(57) A system and method for minimizing an objective function with constraints using an optimal tensor network configuration with symmetries are provided. The system comprises a non-transitory computer-readable memory and a processor in communication with the memory storing program instructions. The program instructions, when executed by a processor, causes the processor to: receive an objective function and one or more constraints for optimization; generate a time evolution block decimation (TEBD) process based on the objective function without the one or more constraints: generate a tensor network based on the objective function with symmetries to satisfy the one or more constraints; and find the optimal tensor network that optimizes the objective function using the TEBD process. Generating the tensor network may include applying the symmetries to transform the objective function into an unconstrained quadratic unconstrained binary optimization (QUBO) model.

FIG. 3

**EP 4 575 843 A1**

Processed by Luminess, 75001 PARIS (FR)

## Description

### FIELD

Various embodiments are described herein that generally relate to system for symmetric tensor network and adaptive trotter delta for optimization, as well as the methods.

### BACKGROUND

The following paragraphs are provided by way of background to the present disclosure. They are not, however, an admission that anything discussed therein is prior art or part of the knowledge of persons skilled in the art.

Conventionally, optimization problems are solved with LaGrange multipliers for every constraint. The result of using this is a cost function that is huge but is mostly constrained.

Some optimization problems that can become untractable using conventional approaches include logistics optimization, predictive maintenance, and portfolio optimization.

When optimization problems are untractable, they can result in imperfect solutions, or when accuracy is needed, they can result in a drain on computer resources, overheating of computing devices, increased memory usage, and energy wastage, for example.

There is a need for a system and method that addresses the challenges and/or shortcomings described above.

### SUMMARY OF VARIOUS EMBODIMENTS

Various embodiments of a system and method for symmetric tensor network and adaptive trotter delta for optimization, and computer products for use therewith, are provided according to the teachings herein.

According to one aspect of the invention, there is disclosed a system for minimizing an objective function with constraints using an optimal tensor network configuration with symmetries, the system comprising: a non-transitory computer-readable memory; and a processor in communication with the memory storing program instructions that, when executed by a processor, causes the processor to: receive an objective function and one or more constraints for optimization; generate a time evolution block decimation (TEBD) process based on the objective function without the one or more constraints; generate a tensor network based on the objective function with symmetries to satisfy the one or more constraints; and find the optimal tensor network that optimizes the objective function using the TEBD process.

According to another aspect of the invention, there is disclosed a computer-implemented method for minimizing an objective function with constraints using an optimal tensor network configuration with symmetries, the method comprising: receiving an objective function and one or more constraints for optimization; generating a time evolution block decimation (TEBD) process based on the objective function without the one or more constraints; generating a tensor network based on the objective function with symmetries to satisfy the one or more constraints; and finding the optimal tensor network that optimizes the objective function using the TEBD process.

In at least one embodiment, generating the tensor network comprises applying the symmetries to transform the objective function into an unconstrained quadratic unconstrained binary optimization (QUBO) model.

In at least one embodiment, generating the tensor network comprises adding additional sites to the tensor network.

In at least one embodiment, finding the optimal tensor network uses the TEBD process.

In at least one embodiment, finding the optimal tensor network further comprises using an adaptive trotter scheduler in conjunction with the TEBD process.

In at least one embodiment, the adaptive trotter delta scheduler comprises a reducer, a stagnater, and a deepener.

In at least one embodiment, at least one of the reducer, the stagnater, or the deepener comprises modifying a trotter delta in the TEBD process.

Other features and advantages of the present application will become apparent from the following detailed description taken together with the accompanying drawings. It should be understood, however, that the detailed description and the specific examples, while indicating preferred embodiments of the application, are given by way of illustration only, since various changes and modifications within the spirit and scope of the application will become apparent to those skilled in the art from this detailed description.

### BRIEF DESCRIPTION OF THE DRAWINGS

For a better understanding of the various embodiments described herein, and to show more clearly how these various embodiments may be carried into effect, reference will be made, by way of example, to the accompanying drawings which show at least one example embodiment, and which are now described. The drawings are not intended to limit the scope of the teachings described herein.

FIG. 1 shows a block diagram of an example embodiment of a system for symmetric tensor network and adaptive trotter delta for optimization.

FIG. 2 shows a block diagram of an example of predefined Trotter deltas evolution in a time-evolving block decimation (TEBD) algorithm.

FIG. 3 shows a flowchart of an example embodiment of an adaptive scheduler using an adaptive trotter delta.

FIG. 4 shows a bar chart of an example of relative error in an objective as a function of an initial value in a TEBD algorithm.

FIG. 5 shows graphs for an example of the stagnater and deepener components and the effects of deltas evolution.

FIG. 6 shows graphs illustrating an example of matrix product states (MPS) and conflict fixing.

FIG. 7 shows graphs illustrating an example of entropies, energies, and objectives of a model.

FIG. 8 shows graphs illustrating an example of entropies and energies of another model.

FIG. 9 shows graphs illustrating an example of tensor links.

FIG. 10 shows graphs illustrating an example of symmetric tensor operations.

FIG. 11 shows a graph of an example of the intersection of spans in a Hilbert space.

FIG. 12 shows graphs illustrating an example of an intersection of tensors.

FIG. 13 shows graphs illustrating an example of the reshaping of indices of a symmetric tensor.

FIG. 14 shows graphs illustrating an example of fusing groups.

FIG. 15 shows a graph of an example of a general Ising model with 100 sites.

FIG. 16 shows a graph of an example of a general Ising model with 12 sites.

FIG. 17 shows a graph of an example of a tensor network precomputation scheme with 1 gate.

FIG. 18 shows a graph of an example of a tensor network precomputation scheme comparing symmetric versus precomputed symmetric.

FIG. 19 shows a diagram of an example of a conversion from element-wise to block structure for a general precomputation scheme.

FIG. 20 shows a graph of an example of gate contraction.

FIG. 21 shows a graph of an example of standard and symmetric with precomputation.

FIGS. 22-24 show graphs illustrating examples of gates created from Ising Hamiltonians.

FIG. 25 shows a graph of an example of constraint fulfillment for a site k.

FIG. 26 shows a graph of an example of constraint fulfillment for a site 1.

FIG. 27 shows a graph of an example of constraint fulfillment for a site n.

FIG. 28 shows graphs illustrating an example of truncation to discard surplus sectors.

FIG. 29 shows a diagram illustrating an example of the space of solutions in a Hilbert space.

FIG. 30 shows a graph of an example of slack variables incorporated into a matrix product state (MPS).

FIG. 31 shows a diagram of an example of a solution obtained by the fusion rule.

FIG. 32 shows graphs illustrating an example total entropies, energies, and penalty terms costs for a general Ising Hamiltonian with 50 particles.

FIGS. 33A to 33C show graphs of an example objective, constraint satisfaction, and entropy of QPLIB model 0633.

FIGS. 34A to 34C show graphs of an example objective, constraint satisfaction, and entropy of QPLIB model 2512.

FIGS. 35A to 35C show graphs of an example objective, constraint satisfaction, and entropy of QPLIB model 3834.

FIGS. 36A to 36C show plots of a symmetric MPS with different risk aversion and bond dimension.

Further aspects and features of the example embodiments described herein will appear from the following description taken together with the accompanying drawings.

## DETAILED DESCRIPTION OF THE EMBODIMENTS

Various embodiments in accordance with the teachings herein will be described below to provide an example of at least one embodiment of the claimed subject matter. No embodiment described herein limits any claimed subject matter. The claimed subject matter is not limited to devices, systems, or methods having all of the features of any one of the devices, systems, or methods described below or to features common to multiple or all of the devices, systems, or methods described herein. It is possible that there may be a device, system, or method described herein that is not an embodiment of any claimed subject matter. Any subject matter that is described herein that is not claimed in this document may be the subject matter of another protective instrument, for example, a continuing patent application, and the applicants, inventors, or owners do not intend to abandon, disclaim, or dedicate to the public any such subject matter by its disclosure in this document.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures, and components have not been described in detail so as not to obscure the embodiments described herein. Also, the description is not to be considered as limiting the scope of the embodiments described herein.

It should also be noted that the terms "coupled" or "coupling" as used herein can have several different meanings depending in the context in which these terms are used. For example, the terms coupled or coupling can have a mechanical or electrical connotation. For example, as used herein, the terms coupled or coupling can indicate that two elements or devices can be directly connected to one another or connected to one another through one or more intermediate elements or devices via an electrical signal, electrical connection, or a mechanical element depending on the particular context.

It should also be noted that, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

It should be noted that terms of degree such as "substantially", "about" and "approximately" as used herein mean a reasonable amount of deviation of the modified term such that the end result is not significantly changed. These terms of degree may also be construed as including a deviation of the modified term, such as by 1%, 2%, 5%, or 10%, for example, if this deviation does not negate the meaning of the term it modifies.

Furthermore, the recitation of numerical ranges by endpoints herein includes all numbers and fractions subsumed within that range (e.g., 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed, such as 1%, 2%, 5%, or 10%, for example.

It should also be noted that the use of the term "window" in conjunction with describing the operation of any system or method described herein is meant to be understood as describing a user interface for performing initialization, configuration, or other user operations.

The example embodiments of the devices, systems, or methods described in accordance with the teachings herein may be implemented as a combination of hardware and software. For example, the embodiments described herein may be implemented, at least in part, by using one or more computer programs, executing on one or more programmable devices comprising at least one processing element and at least one storage element (i.e., at least one volatile memory element and at least one non-volatile memory element). The hardware may comprise input devices including at least one of a touch screen, a keyboard, a mouse, buttons, keys, sliders, and the like, as well as one or more of a display, a printer, and the like depending on the implementation of the hardware.

It should also be noted that there may be some elements that are used to implement at least part of the embodiments described herein that may be implemented via software that is written in a high-level procedural language such as object oriented programming. The program code may be written in C++, C#, JavaScript, Python, or any other suitable programming language and may comprise modules or classes, as is known to those skilled in object-oriented programming. Alternatively, or in addition thereto, some of these elements implemented via software may be written in assembly language, machine language, or firmware as needed. In either case, the language may be a compiled or interpreted language.

At least some of these software programs may be stored on a computer readable medium such as, but not limited to, a ROM, a magnetic disk, an optical disc, a USB key, and the like that is readable by a device having a processor, an operating system, and the associated hardware and software that is necessary to implement the functionality of at least one of the embodiments described herein. The software program code, when read by the device, configures the device to operate in a new, specific, and predefined manner (e.g., as a specific-purpose computer) in order to perform at least one of the methods described herein.

At least some of the programs associated with the devices, systems, and methods of the embodiments described herein may be capable of being distributed in a computer program product comprising a computer readable medium that bears computer usable instructions, such as program code, for one or more processing units. The medium may be provided in various forms, including non-transitory forms such as, but not limited to, one or more diskettes, compact disks, tapes, chips, and magnetic and electronic storage. In alternative embodiments, the medium may be transitory in nature such as, but not limited to, wire-line transmissions, satellite transmissions, internet transmissions (e.g., downloads), media, digital and analog signals, and the like. The computer useable instructions may also be in various formats, including compiled and non-compiled code.

In accordance with the teachings herein, there are provided various embodiments for a system for symmetric tensor network and adaptive trotter delta for optimization, and computer products for use therewith.

## 1 Overview

Symmetries as an inherent part of most physical systems is an important concept to take into consideration when designing quantum-inspired algorithms. In fact, Ising Hamiltonians inherit from U(1) symmetry which can be used to fix some conservative quantities along the time evolution of a quantum state as a Matrix Product State (MPS).

An implementation of symmetric MPS for U(1) sectors in the TEBD optimizer of singularity is presented, along with how to deal with transforming a constrained model into an unconstrained quantum (e.g., quadratic unconstrained binary optimization, or "QUBO") model [32] which encodes the constraints directly as symmetries of the initial state of the evolution. One can improve the crossover in terms of bond dimension advantage for symmetric-MPS compared to standard ones through custom precomputation and perspective using a block-wise backend. Furthermore, three of the main improvements and benefits of the Symmetric TEBD are presented: discarding the gates introduced by the constrained terms in the objective; alleviating the number of parameters of the MPS by a factor > 5; and getting rid of the cumbersome penalty strength.

Following previous research and work on symmetric tensor networks [2] [6] [10] [19] [20] [21] [22], one can transform the unsymmetric TEBD into one that makes the most out of symmetries. U(1) symmetries provide a way to transform a tensor into two tensors: a structural tensor and a degeneracy tensor.

### 2.1 Basic Definitions

*Tensor:* A multidimensional array of complex numbers.

*Bond dimension:* Size of the dimensions of the tensors which is also called virtual dimension; controls the size of the input and output of a convolutional neural network (CNN) as well as the amount of correlation between data.

*Tensor network diagrams:* A graphical notation in which each tensor is replaced by an object such as a circle or square, and its dimensions denoted by links (or "legs") connected to the object.

*Tensor contraction:* Multiplication of tensors along their shared dimension, i.e., summation over their shared indices.

### 2.2 System Structure

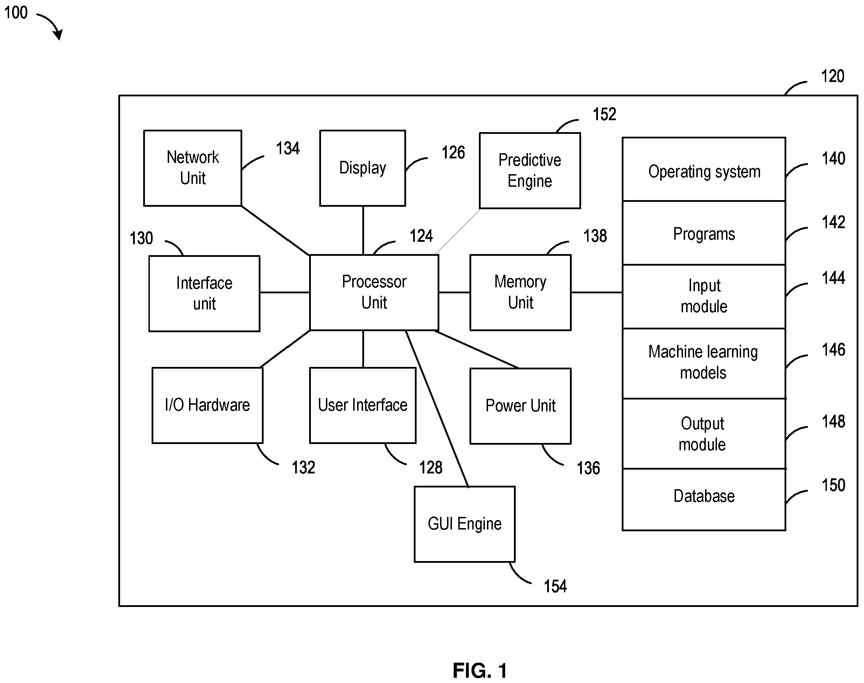

Reference is first made to FIG. 1, showing a block diagram of an example embodiment of system 100 for a system for symmetric tensor network and adaptive trotter delta for optimization. The system 100 includes at least one server 120. The server 120 may communicate with one or more user devices (not shown), for example, wirelessly or over the Internet. The system 100 may also be referred to as a machine learning system when used as such.

The user device may be a computing device that is operated by a user. The user device may be, for example, a smartphone, a smartwatch, a tablet computer, a laptop, a virtual reality (VR) device, or an augmented reality (AR) device. The user device may also be, for example, a combination of computing devices that operate together, such as a smartphone and a sensor. The user device may also be, for example, a device that is otherwise operated by a user, such as a drone, a robot, or remote-controlled device; in such a case, the user device may be operated, for example, by a user through a personal computing device (such as a smartphone). The user device may be configured to run an application (e.g., a mobile app) that communicates with other parts of the system 100, such as the server 120.

The server 120 may run on a single computer, including a processor unit 124, a display 126, a user interface 128, an interface unit 130, input/output (I/O) hardware 132, a network unit 134, a power unit 136, and a memory unit (also referred to as "data store") 138. In other embodiments, the server 120 may have more or less components but generally function in a similar manner. For example, the server 120 may be implemented using more than one computing device.

The processor unit 124 may include a standard processor, such as the Intel Xeon processor, for example. Alternatively, there may be a plurality of processors that are used by the processor unit 124, and these processors may function in parallel and perform certain functions. The display 126 may be, but not limited to, a computer monitor or an LCD display such as that for a tablet device. The user interface 128 may be an Application Programming Interface (API) or a web-based application that is accessible via the network unit 134. The network unit 134 may be a standard network adapter such as an Ethernet or 802.11x adapter.

The processor unit 124 may execute a predictive engine 152 that functions to provide predictions by using machine learning models 146 stored in the memory unit 138. The predictive engine 152 may build a predictive algorithm through machine learning. The training data may include, for example, image data, video data, audio data, and text.

The processor unit 124 can also execute a graphical user interface (GUI) engine 154 that is used to generate various GUIs. The GUI engine 154 provides data according to a certain layout for each user interface and also receives data input or control inputs from a user. The GUI then uses the inputs from the user to change the data that is shown on the current user interface, or changes the operation of the server 120 which may include showing a different user interface.

The memory unit 138 may store the program instructions for an operating system 140, program code 142 for other applications, an input module 144, a plurality of machine learning models 146, an output module 148, and a database 150. The machine learning models 146 may include, but are not limited to, image recognition and categorization algorithms based on deep learning models and other approaches. The database 150 may be, for example, a local database, an external database, a database on the cloud, multiple databases, or a combination thereof.

In at least one embodiment, the machine learning models 146 include a combination of convolutional and recurrent neural networks. Convolutional neural networks (CNNs) may be designed to recognize images or patterns. CNNs can perform convolution operations, which, for example, can be used to classify regions of an image, and see the edges of an object recognized in the image regions. Recurrent neural networks (RNNs) can be used to recognize sequences, such as text, speech, and temporal evolution, and therefore RNNs can be applied to a sequence of data to predict what will occur next. Accordingly, a CNN may be used to read what is happening on a given image at a given time, while an RNN can be used to provide an informational message.

The programs 142 comprise program code that, when executed, configures the processor unit 124 to operate in a particular manner to implement various functions and tools for the system 100.

The methods, processes, and operations described herein may be implemented in whole in part on some or all of the system 100.

### 3 Adaptive Trotter for Time Evolution Block Decimation (TEBD)

### 3.1 TEBD & Ideas

The Time Evolution Block Decimation algorithm [3] [4] [5] is governed by the powerful idea of the imaginary time evolution of an initial state [34] [35] [27] to the ground state.

Consider an initial state $|\phi_{\text{init}}\rangle$ and its evolution under the Hamiltonian of our problem. One gets, after a time $t$, the

evolved state $|\Phi(t)\rangle = \hat{U}(t)|\phi_{\text{init}}\rangle = \sum_n c_n e^{-iE_n t/\hbar}|\Phi_n\rangle$ with $\hat{U}: t \mapsto e^{-it\mathcal{H}}$ the time evolution operator of the Hamiltonian of the system. By a change of variable $\tau = -it,$ one obtains $|\Phi(\tau)\rangle = \sum_n c_n e^{-E_n \tau/\hbar}|\phi_n\rangle \underset{\tau \to \infty}{\sim} c_0 e^{-E_0 \tau/\hbar}|\Phi_0\rangle$. Hence,

$$\lim_{\tau \to \infty} \frac{|\Phi(\tau)\rangle}{||\Phi(\tau)||} = |\Phi_0\rangle$$

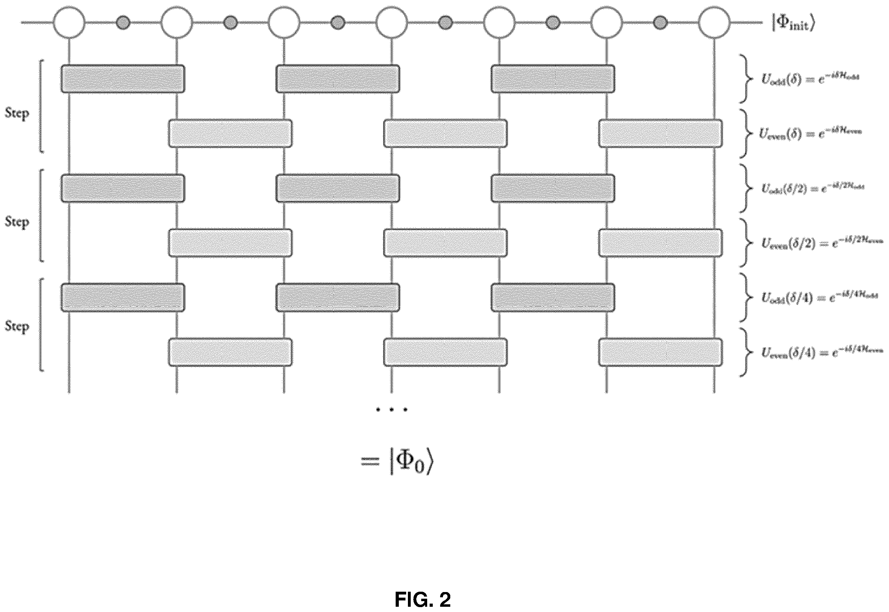

To numerically achieve this time evolution, one takes advantage of the Trotter-Suzuki decomposition, decomposing the Hamiltonian into odd and even parts, and use the Baker-Campbell-Hausdorff formula to approximate the exact time evolution of $\mathcal{H}$. (See FIG. 2.)

$$\hat{U}(\delta) = e^{-i\delta\mathcal{H}}$$
$$= e^{-i\delta\mathcal{H}_{\text{even}}} e^{-i\delta\mathcal{H}_{\text{odd}}} e^{-i\delta^2[\mathcal{H}_{\text{odd}}\mathcal{H}_{\text{even}}]}$$
$$= e^{-i\delta\mathcal{H}_{\text{even}}} e^{-i\delta\mathcal{H}_{\text{odd}}} + O(\delta^2)$$

Unfortunately, when doing a TEBD algorithm with predefined Trotter deltas evolution (starting from $\delta = 0.5$ evolving for $k$ steps then changing delta to 0.1 and so on), the state can eventually get stuck into a local minimum. One of the consequences is a stagnating total entropy as well as an energy that is not decreasing anymore to the ground state.

### 3.2 Adaptive Trotter delta

Several ways to try leaving these local minima can be implemented and tested (addition of transverse field noise, adaptive penalty strength, adaptive trotter delta, multi-seed runs...). To address this problem, one may use an adaptive trotter delta scheduler. Its basic function is to adapt the trotter delta to the dynamic of the total entropy and the energy of the current state of the Matrix Product State (MPS) being used. Ideally, one employs a long evolution to understand more of the dynamics and thus alter the trotter delta accordingly as precisely as possible.

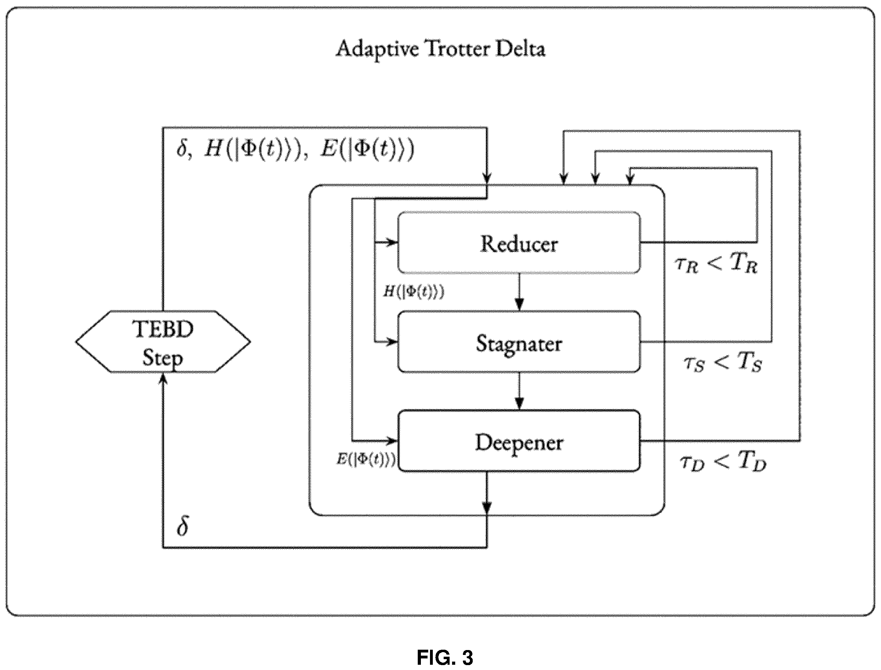

The adaptive scheduler is composed of three main components: a "reducer", a "stagnater", and a "steepener". (See FIG. 3.) The reducer consists of a reduction of the trotter delta based on how long the total entropy has not improved from its lowest value. The stagnater increases the trotter delta based on the rate of change of the entropy for a given interval of time (the tangent from the current entropy to that of the beginning of the time interval should be greater than a given ratio). The aim is to spot stagnating entropy in the middle of the evolution which usually means being stuck in a local minimum and to increase the trotter delta to get out of it. Finally, the deepener is an energy-monitored scheduler that looks at how long the energy $E(|\Phi(t)\rangle)$ has not changed and tries to reduce the trotter delta to move with smaller steps and fall to a minimum (if it is a deep local minimum, the stagnater will normally notice it and increase the trotter delta to escape it).

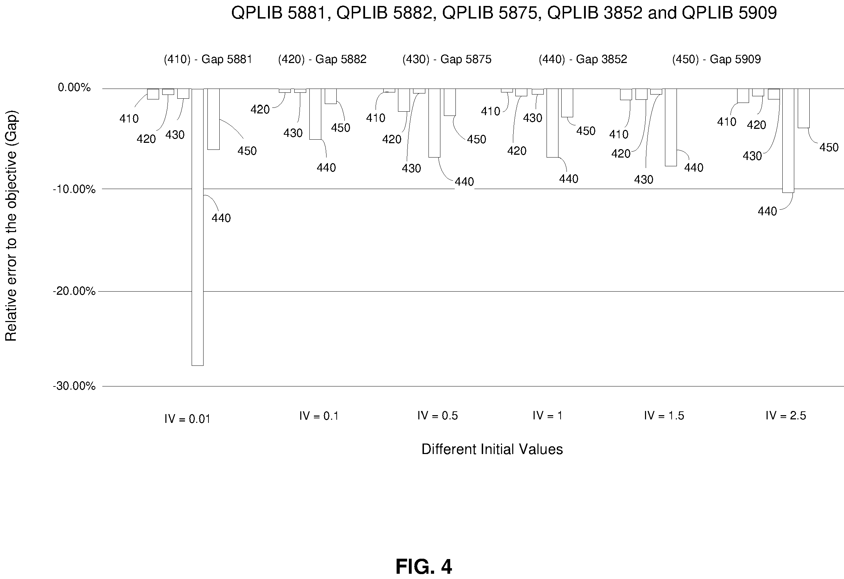

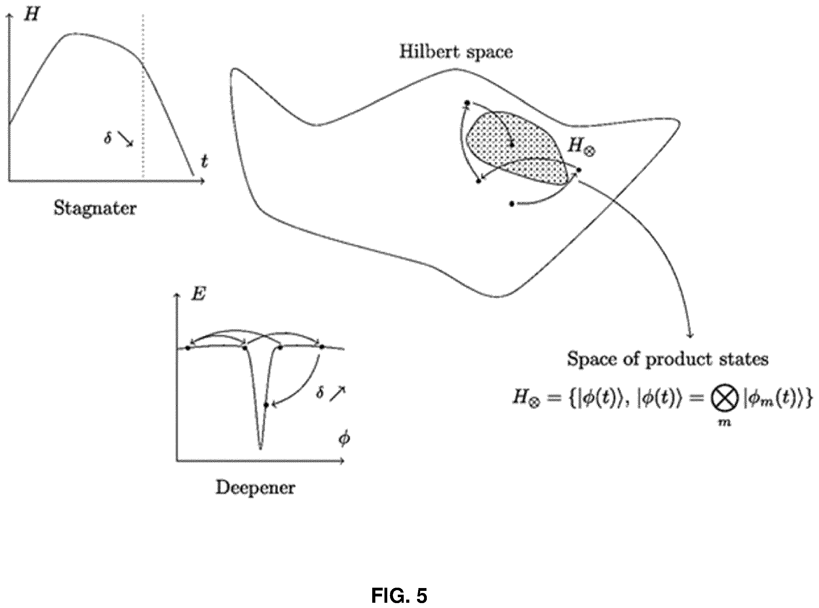

In doing so, one still needs to be aware of the initial value. Indeed, one can reduce the total number of parameters to a bare minimum of only one: the initial trotter delta value (even if some internal parameters of the scheduler can still be tweaked). However, this value carries a lot of meaning for the evolution, especially when one is limited in time to run a model. Indeed, this settles the initial delta of evolution: a value too large would result in big jumps of the state impeding the convergence until the scheduler fixes it after a number of steps that can be important or too small and the evolution would converge slowly to a minimum. FIG. 4 shows how the relative error in the objective varies as a function of the initial value for a 30 steps iteration of the TEBD algorithm for several QUBO models from the QPLIB library (a quadratic programming instances library with example problems). Specifically, FIG. 4 shows the following: bar 410 - Gap 5881; bar 420 - Gap 5882; bar 430 - Gap 5875; bar 440 - Gap 3852; bar 450 - Gap 5909. A trade-off has to be made between a too high and too small initial value for the adaptive trotter delta to be still efficient. (See FIG. 5.)

### 3.3 Multi-sites reduced density matrix

The usual way in Singularity to compute the final ground state is to compute the reduced density matrix (RDM) $\rho_k$ for each site $k$, take the diagonal diag $(\rho_k) = (p_0, p_1)$, and set the qubit value to the state corresponding to the larger of the two probabilities [36]. However, sometimes one needs to do this reduced density matrix on multiple sites to grasp the best result possible, as dealing with a more general substate guarantees a better result especially when the final state is not exactly a product state and still depends on its neighbors. Furthermore, for future improvements, one may need to have this computed state at each step of the TEBD (for a scheduler...). A solution to that is thus to compute this reduced density matrix on multiple sites making a window sliding from the first site to the last one minus the window size.

One issue has to be tackled: how to resolve conflicts. Indeed, the maximum element of the diagonal of $\rho_k^{(m)}$ gives the corresponding state. Supposed one has 001 starting at site 1 (thus getting $x_1 = 0$, $x_2 = 0$, $x_3 = 1$), one then shifts the window with an offset of 1 and gets 100 ($x_2 = 1$, $x_3 = 0$, $x_4 = 0$). There are then two conflicts, one on $x_2$ and one on $x_3$. Although a multi-site method will normally give a better approximation to the most probable state, the order in which states are chosen may introduce a bias. The reason is that the current MPS is in a poor product state and computing the reduced density matrix on several sites does not yield the same result for each site. Two solutions exist: the first one is the cheapest one which is basically to do nothing, just compute the state by iteratively fixing the previous sites and storing the new ones depending on them. The second one can be quite costly if performed during the time evolution at each step, especially when the state is very entangled. The idea is to compute the reduced density matrix from left to right with a sliding window, storing each conflict and computing for each one the left and right part by fixing the conflicts site, enforcing them to take the conflicted values.

Another important point here is that when one calculates the reduced density matrix in this way (whether for single-site or multi-site), one assumes that the MPS is in canonical form. The way the gates are applied in the implementation of TEBD however does not guarantee that this is the case.

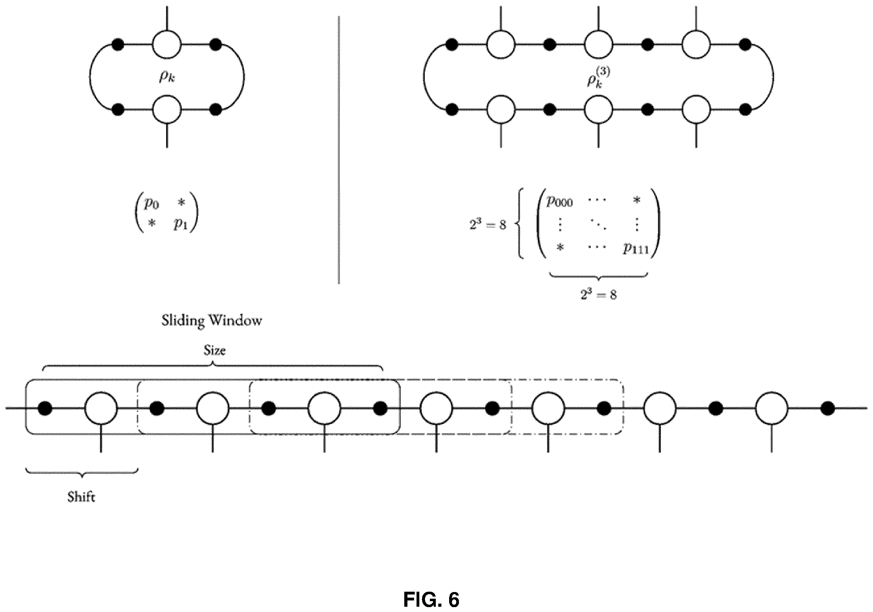

Consider an MPS storing the state, and its probabilities, as well as each conflict encountered. For each conflict, one enforces the conflict state by fixing it and performing a left pass and a right pass (see FIG. 6) to get the conflict state from a fixed site. For each of these global states, one computes its existing probability and returns the most probable one.

$$P(s_1 \cdots s_n \,|\, s_r \cdots s_{r+s}) = \prod_{i=1}^{r-1} \left( \frac{p^{i\cdots i+s}_{s_i \cdots s_{i+s}}}{p^{i\cdots i+s}_{0 s_{i+1} \cdots s_{i+s}} + p^{i\cdots i+s}_{1 s_{i+1} \cdots s_{i+s}}} \right) p^{r\cdots r+s}_{s_r \cdots s_{r+s}} \prod_{i=r+1}^{n} \left( \frac{p^{i\cdots i+s}_{s_i \cdots s_{i+s}}}{p^{i\cdots i+s}_{s_i \cdots s_{i+s-1} 0} + p^{i\cdots i+s}_{s_i \cdots s_{i+s-1} 1}} \right)$$

The main result of this is (C being the conflicts)

$$|s_1 \cdots s_n\rangle = \arg \max_{s_1 \cdots s_n \,|\, s_r \cdots s_{r+s} \in \mathcal{C}} P(s_1 \cdots s_n \,|\, s_r \cdots s_{r+s})$$

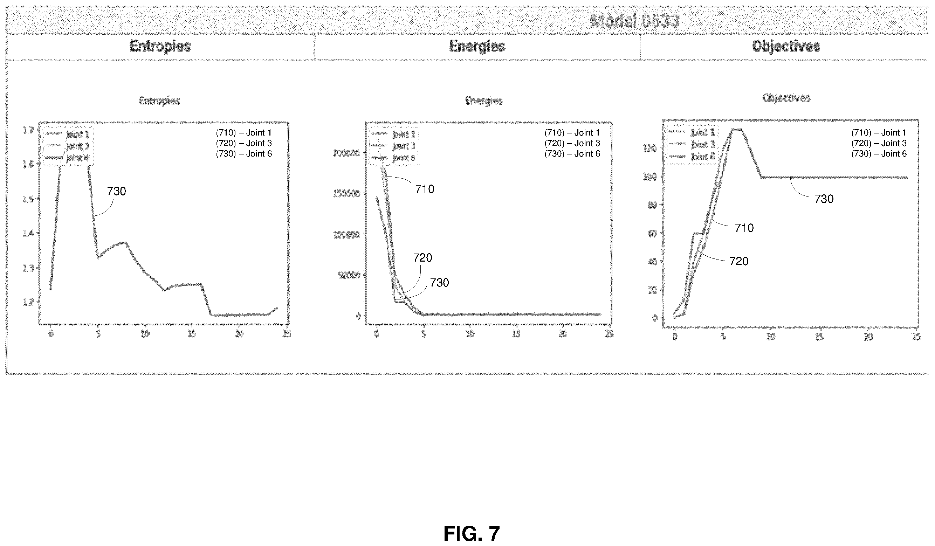

In FIG. 6, one runs on the same model the TEBD algorithm with different window length (that is different size of the multi-site reduced density matrix). The conclusion that one can already anticipate is that at the beginning of the evolution the state is highly entangled leading to different most probable states and thus different energies and objectives. The result is that using multiple-sites RDM, one gets a more accurate state on the first steps. See FIG. 7, which shows the following lines: line 710 - Joint 1; line 720 - Joint 3; line 730 - Joint 6. In FIG. 7, the parameters have the following values: Trotter init -1.50; Total length - 10; Evolution length - 25; Bond dimension - 10; Init MPS Superposition; Seed - 42.

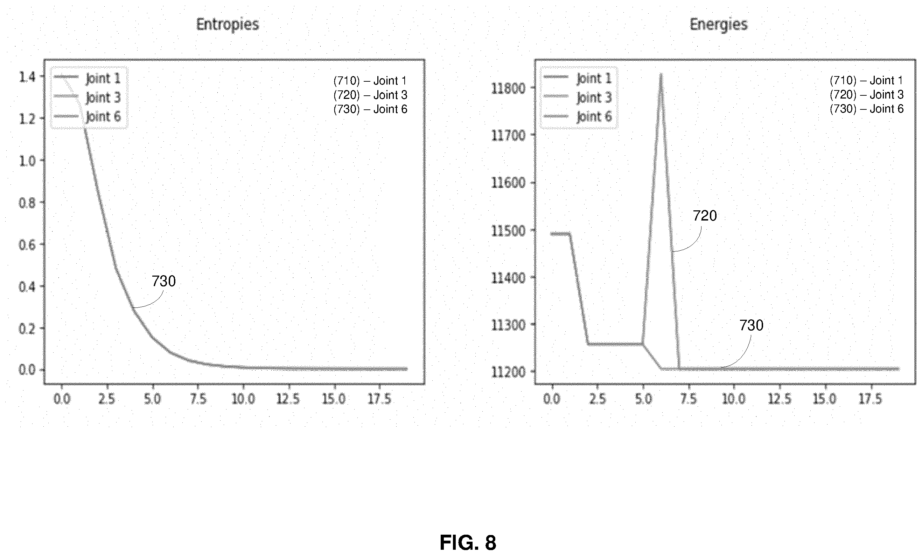

One can find support for these arguments in FIG. 8. This is three runs of the model 3775. One clearly can see that the total entropy is exactly the same for all evolutions while there is a peak of energy for Joint 1 and 3 (a multiple site RDM on 1 and 3 sites) that has been avoided with a 6-site RDM. Hence, it strengthens the fact that the 1-site RDM can lead to misinterpretation of the most probable product state which will be of importance as discussed below.

## 4 Symmetric MPS

In nature, symmetries are ubiquitous and provide an essential advantage in physics by reducing the problem size and focusing the search of the solution on some specific parts of the space. In physics, symmetries are equivalent to conserved quantities as due by the famous Noether theorem, that is operators commuting with the Hamiltonian under consideration. Hence, one can numerically speed up the computation in some algorithms by focusing on precise symmetry sectors.

### 4.1 Symmetric Invariant tensors

First of all, consider how symmetries work and how to implement them in the Matrix Product State and TEBD framework. Symmetric eigenstates of a Hamiltonian $\mathcal{H}$ are of the form $|\varphi_{l,m,\partial}\rangle$ and satisfy $\mathcal{H} |\varphi_{l,m,\partial}\rangle = E_{l,\partial}|\varphi_{l,m,\partial}\rangle$ where $l$ labels an irreducible representation ("irrep") subspace called a sector or a charge (primary quantum number), $m$ designates different states within the same irrep subspace (this is the secondary quantum number) and the energy level does not depend on it as a consequence of Schur lemma [24] [19] [20] [21] [22] [10] [6] [14] [15]. Finally, $\partial$ is the symmetry degeneracy label. Symmetries in quantum mechanics which are typically represented by a unitary representation of a group of transformations protected by the physics of the system (i.e., commuting with the Hamiltonian) can be either abelian or not. Dealing with abelian groups is computationally easier because from the result of the Wigner-Eckart theorem, the Clebsch-Gordan coefficients needed for fusing the different charges ends up being simple Kronecker deltas (while for non-abelian ones, one should keep track and store all the coefficients from the considered group). A unitary representation $U(g)$ of a group $G$ acts on an eigenstate as :

$$U(g)|\varphi_{l,m,\partial}\rangle = \sum_{m'} W^{[l]}_{m,m'}(g)|\varphi_{l,m',\partial}\rangle$$

where $W^{[l]}(g)$ is the $l$-sector irrep matrix associated to the group element 9.

One interesting property of abelian groups is that the irreps are one-dimensional and take the simple form of being phase factors $W^{[l]}(g)=e^{i\phi l(g)}$ for $g \in G$, thus getting rid of the second quantum number. The symmetric Hamiltonian is then block-diagonal in the sectors I leading to the use of block sparse computational framework and library to speed up runtimes. The above equation can be rewritten simply as:

$$U(g)|\varphi_{l,,\partial}\rangle = e^{i\phi_l(g)}|\varphi_{l,\partial}\rangle$$

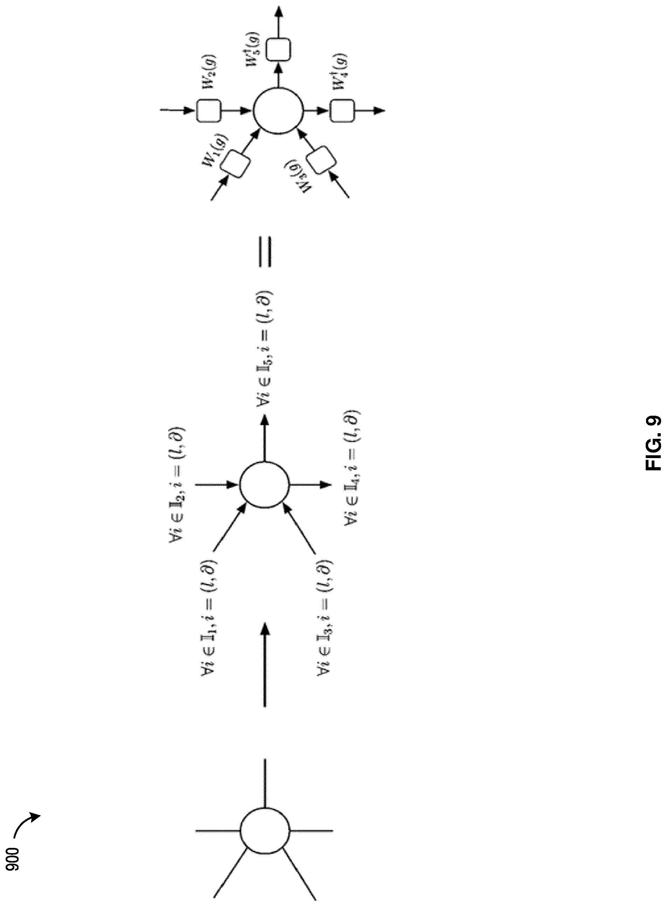

Now consider the $U(1)$ continuous planar rotation group which is the group related to conservation of integer quantities such as total particle number or in this case equality constraints (with integer coefficients) in constrained combinatorial optimization. The irreps are elements of $\mathbb{Z}$, the inverse of an irrep $l$ is $l^\dagger = -l$ and the fusion rule of two irreps is simply the addition $l \oplus l' = l + l'$. A tensor link is transformed to be symmetric by associating a quantum number to each link index $i \mapsto (l, \partial)$ as well as a direction for each link (incoming or outcoming) which will allow to create the symmetry sectors via the fusion rule (like Kirchhoff's first law in electricity). Physically, one associates a specific unitary representation of the group with each link which can also be viewed as equipping each link with a diagonal unitary matrix such that (see FIG.9):

$$\forall g \in G, i, i' \in \mathbb{I}, \quad [W(g)]_{i,i'} = [W(g)]_{(l,\partial),(l',\partial')} = e^{i\phi_l(g)}\delta_{l,l'}\delta_{\partial,\partial'}$$

Using all previous information, one can state that a n-order tensor is a symmetric invariant tensor if it is left unchanged by the $n$ representations of $G$ associated to each link

$$\forall g \in G, \quad T^{l_1\cdots l_n}_{\partial_1\cdots\partial_n} = T^{l_1\cdots l_n}_{\partial_1\cdots\partial_n} \prod_{r=1}^{n} \left(e^{i\phi_{l_r}(g)}\right)^{\dagger_r}$$

where $\dagger_r \in \{1, \dagger\}$ depending on the flow of the link. Hence, T is symmetric if it has non-zero elements where

$$\prod_{r=1}^{n} \left(e^{i\phi_{l_r}}\right)^{\dagger_r} = \exp\left(i\sum_{r=1}^{n}\phi_{l_r^{\dagger_r}}(g)\right) = 1 \iff \sum_{r=1}^{n}\phi_{l_r^{\dagger_r}}(g) = 0$$

This equation can be rewritten exactly as a Kronecker delta using the equivalence between phase terms and fusion rule of the group being considered.

$$l_1 \oplus l_2 = l' \iff \forall g \in G, \quad \phi_{l_1}(g) + \phi_{l_2}(g) = \phi_{l'}(g) \mod 2\pi$$

Thus,

$$T_{i_1\cdots i_n} \text{ is non zero } \iff l_1^{\dagger_1} \oplus \cdots \oplus l_n^{\dagger_n} = 0$$

$$\tilde{\delta}_{l_1 \cdots l_n} = \delta_{l_1^{\dagger 1} \oplus \cdots l_n^{\dagger n}, 0}$$

Hence, one can define a structural tensor     as well as degeneracy subtensors $[R^{l1 \cdots ln}]_{\partial 1 \cdots \partial n}$ defined over the degeneracy subspaces of all possible matches.

$$T^{l_1 \cdots l_n}_{\partial_1 \cdots \partial_n} = \left[ R^{l_1 \cdots l_n} \right]_{\partial_1 \cdots \partial_n} \times \tilde{\delta}_{l_1 \cdots l_n}$$

This allows one to define numerically an invariant symmetric tensor as degeneracy tensors enabling the construction of a block diagonal tensor (by regrouping all degeneracy tensors together). Extending the notion of symmetric tensors to symmetric tensor networks is straightforward as the only thing to take care of is to have matching links between contracted legs.

### 4.2 Symmetric tensor operations

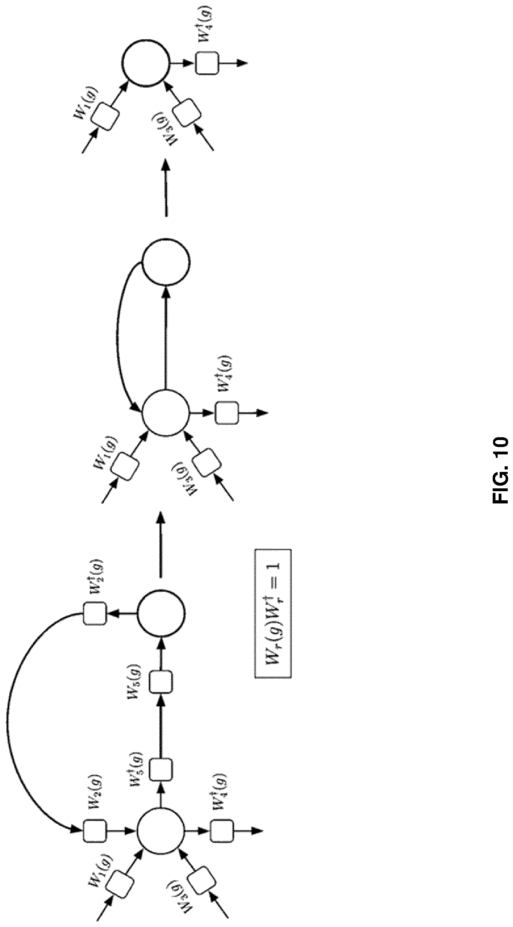

One defines the set of matching quantum numbers of a symmetric tensor T as (see FIG. 10):

$$\mathfrak{L}_T = \left\{ (l_1, \cdots, l_n), l_1^{\dagger 1} \oplus \cdots \oplus l_n^{\dagger n} = 0 \right\}$$

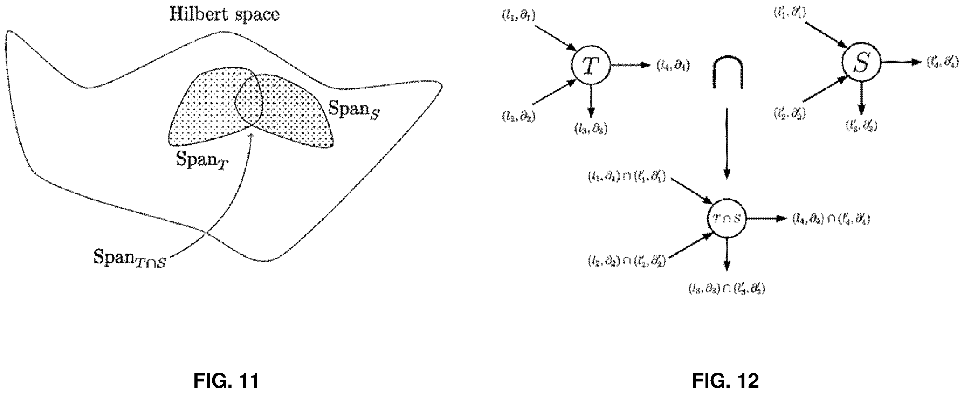

An important type of tensor operation is the intersection of different symmetries (for example having a zero total magnetization with a conserved particle number). Indeed, when implementing several constraints as symmetries, the aim is to concatenate the information provided as symmetries in one tensor to reduce to a minimum the number of non-zero coefficients of the MPS and explore only a fraction of the total Hilbert space during the iteration process. FIG. 11 illustrates that $\text{Span}_T$ is the subspace where the symmetric tensor T is evolving. The intersection is the link obtained from the intersection of the quantum numbers carried by both links with degeneracies equal to the minimum of the associated one.

That is, if there are two tensors $T$ and $S$ with set of matched quantum numbers $\mathfrak{L}_T = \{(2^\dagger, 1, 1), (1^\dagger, 0, 1), (2^\dagger, 2, 0)\}$ and $\mathfrak{L}_S = \{(2^\dagger, 1, 1), (0^\dagger, 0, 0), (2^\dagger, 2, 0)\}$, one gets $\mathfrak{L}_{T \cap S} = \{(2^\dagger, 1, 1),, (2^\dagger, 2, 0)\}$ (see FIG. 12).

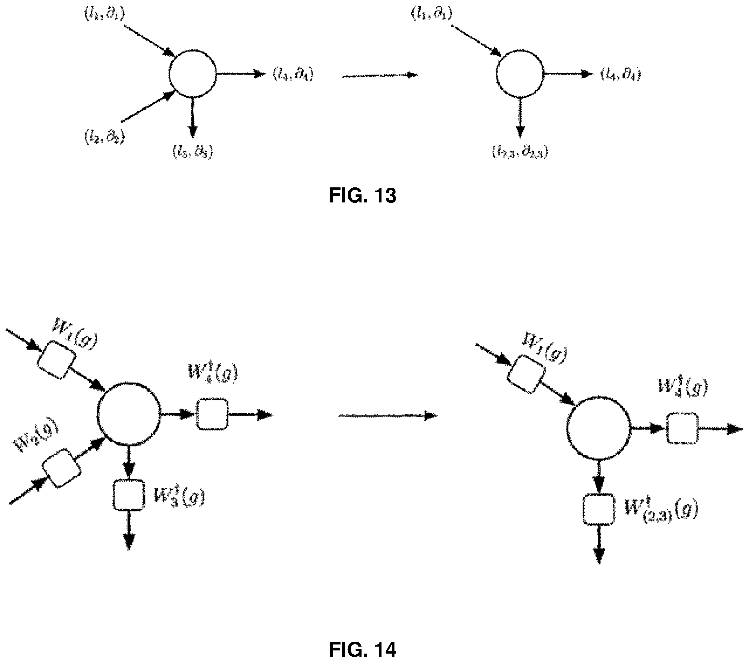

The reshaping of the indices of a symmetric tensor is also something to consider, especially when doing Singular Value Decomposition which requires a matrix to be fed as a parameter (see FIG. 13).

One goal is to define $(l, \partial) = \text{fuse}((l_k, \partial_k), \cdots, (l_m, \partial_m))$ such that the unitary representation of the group associated is the following (see FIG. 14):

$$\forall g \in G, \quad W(g) = \bigoplus_{r=k}^{m} W_r^{\dagger r}(g)$$

This process may be carried out as explained in [24] [19] [20] [21] [22].

Symmetric MPSs provide a great memory reduction as they only focus on the sectors of symmetry forgetting about zeros elements induced by non-matching tuples of incoming and outcoming charges. This reduction allows a distribution of more resources for precomputation (by saving fusion trees in the RAM, see below) to gain good speedup when repeating an operation, which is especially the case in TEBD where one applies the same kind of operators at each step.

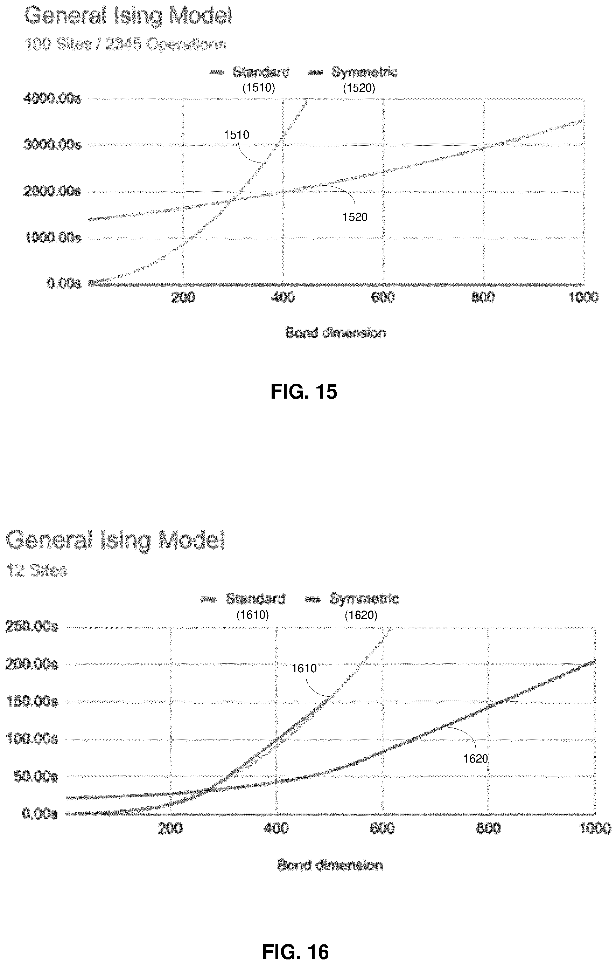

However, the cost of reshaping and permuting indices is very expensive for low bond dimension and it is only overcome for higher bond dimension as the next figure enlightens. See FIGS. 15 and 16, which show the following lines: line 1510 and 1610 - Standard; line 1520 and 1620 - Symmetric.

### 5 Precomputation

Using symmetric tensor networks comes at a price: the computational cost of certain operations of the resultant block sparse structure [19] [20] [21] [22]. This is especially the case with the dot product of two tensors due to the cost of fusing the charges of symmetry. Unfortunately, in the case of the TEBD algorithm, one needs to do a lot of contractions between sites and gates. This is particularly the case when dealing with big quadratic models as frequently encountered in industry with thousands of gates.

One of the ways to relieve the computation of all these fusions of charges is to use a precomputation scheme. Indeed, when doing an iterative process, where one deals with the same operations again and again, the only thing that changes is the actual value of the coefficients of the tensors. However, the reconstruction of the matching quantum numbers (charges) stays the same if there are no updates of these (which is apparent afterward when encountering some problems with SVDs modifying charges). Thus, keeping in the memory the linear maps, obtained with a series of reshaping (splitting and fusing charges) and permuting operations, makes it possible to reuse it and save computation time later on.

### 5.1 Tensor Network precomputation scheme

The tensornetwork library [37] already has a built-in cacher that handles partial precomputation of the fixed tensors in the tensor network.

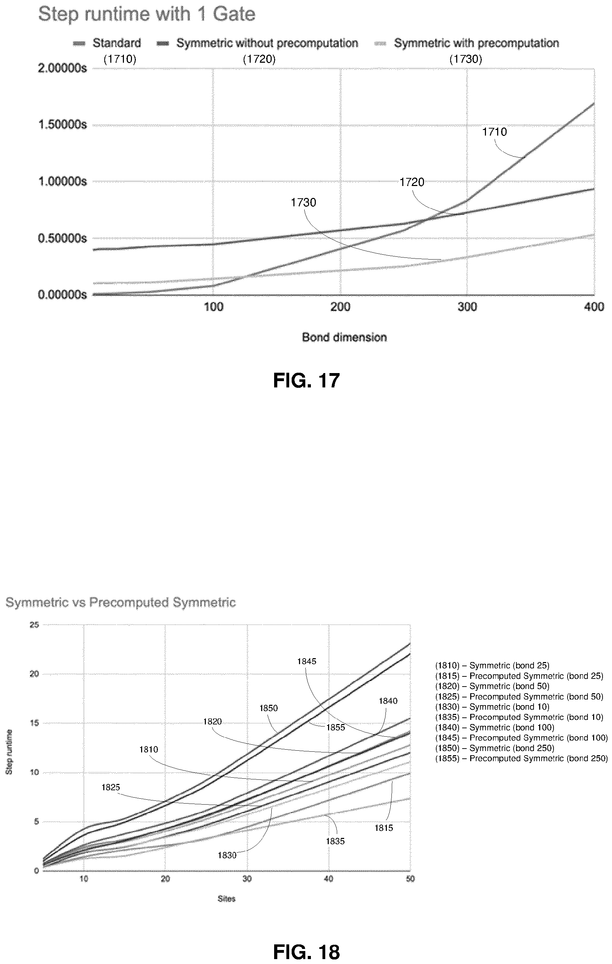

From FIG. 17, it is observed that one reduces the crossover in terms of bond dimension when symmetric-MPS are much faster than usual ones. However, when dealing with Ising models, one would like to stay with low bond dimensions normally between 3 to 20. FIG. 17 shows, in particular, the following lines: line 1710 - Standard; line 1720 - Symmetric without precomputation; line 1730 - Symmetric with precomputation.

Nevertheless, the way the library manages the precomputation (despite being efficient) is not suitable. By that, one has to know that Google's tensornetwork library is using an element-wise decomposition and storing of the block sparse tensors leading to increased computational cost and complexity each time a dot product is made. This can be seen in FIG. 18, which shows the following lines: line 1810) - Symmetric (bond 25); line 1815)-Precomputed Symmetric (bond 25); line 1820) - Symmetric (bond 50); line 1825 - Precomputed Symmetric (bond 50); line 1830 - Symmetric (bond 10); line 1835 - Precomputed Symmetric (bond 10); line 1840 - Symmetric (bond 100); line 1845 - Precomputed Symmetric (bond 100); line 1850 - Symmetric (bond 250); line 1855 - Precomputed Symmetric (bond 250). When using a network contractor (or "neon"), internal tensors are created sequentially through all the contractions; those tensors being symmetric ones are not constrained with the precomputation and exit the scope of the cacher despite having the same structure for each step of the iteration. Indeed, the element-wise construction of symmetric tensors is very powerful and efficient with large tensors; however with TEBD one is restrained to MPS with small bond dimension where the cost of reconstruction stands for most of the computation time.

### 5.2 General precomputation scheme

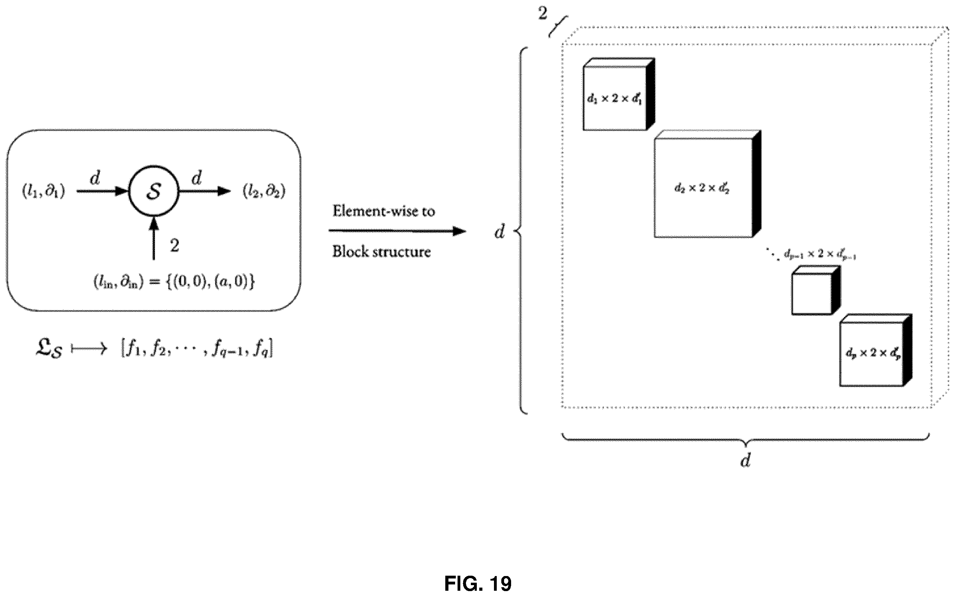

Regarding the above, something interesting would be to implement this total precomputation even for internal tensors which are not global ones and are discarded after the neon is done. For this implementation (see FIG. 19), one has to keep in memory the charges, flows, and block structure of each tensor of the dot product function. One way to do that which is not perfect at all is to store them based on which gates they are related with. However, one sees just after that this is causing a major issue when going to the experimental MVP with 2 qubits to n > 2.

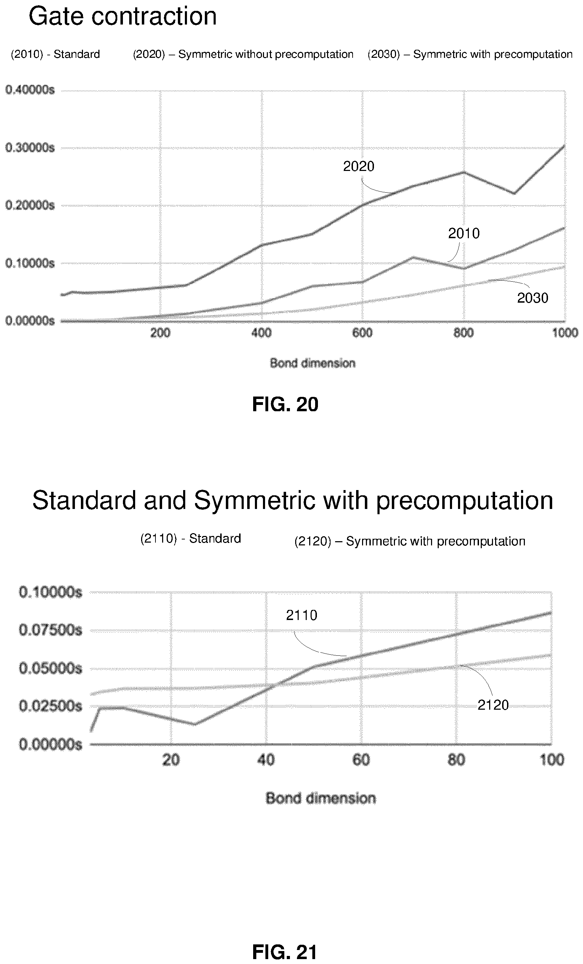

In FIG. 20, one sees that a gate contraction is faster than the non-precomputed one and that extrapolating that to a whole system would lead to great improvement as the symmetric contraction is close to the current dynamic of the standard one. FIG. 20 shows the following lines: line 2010 - Standard; line 2020 - Symmetric without precomputation; line 2030 - Symmetric with precomputation.

An even more promising thing is when it comes to the total runtime of one gate update (meaning contraction + splitting into new sites) where the symmetric backend allows for an even more rapprochement of both curves, leading to a crossover close to the desired one. See FIG. 21, which shows the following lines: line 2110 - Standard; line 2120 - Symmetric with precomputation.

### 6 Constraints as Symmetries

The kinds of problems that one can solve here are quadratic combinatorial optimization problems with linear constraints. They can be mathematically written as a function $f_Q$ that one tries to optimize:

$$f_Q : (x_1, \cdots, x_n) \in \mathbb{B}^n \longmapsto \sum_{i=1}^{n} \sum_{j=1}^{i} q_{ij} x_i x_j \in \mathbb{R}$$

$$\arg\min_{\boldsymbol{x} \in \mathbb{B}^n} \quad f_Q(\boldsymbol{x}) = \boldsymbol{x}^\top Q \boldsymbol{x}$$

$$\text{s.t.} \qquad A\boldsymbol{x} = B$$

More precisely, as one uses U(1) symmetry the constraint coefficients have to be integers, that is $A \in \mathcal{M}_{m,n}(\mathbb{Z})$ and $B \in \mathbb{Z}^m$. One only considers integer coefficients here; however this does not mean one cannot also treat equality constraints with non-interger coefficients.

### 6.1 Equality constraints

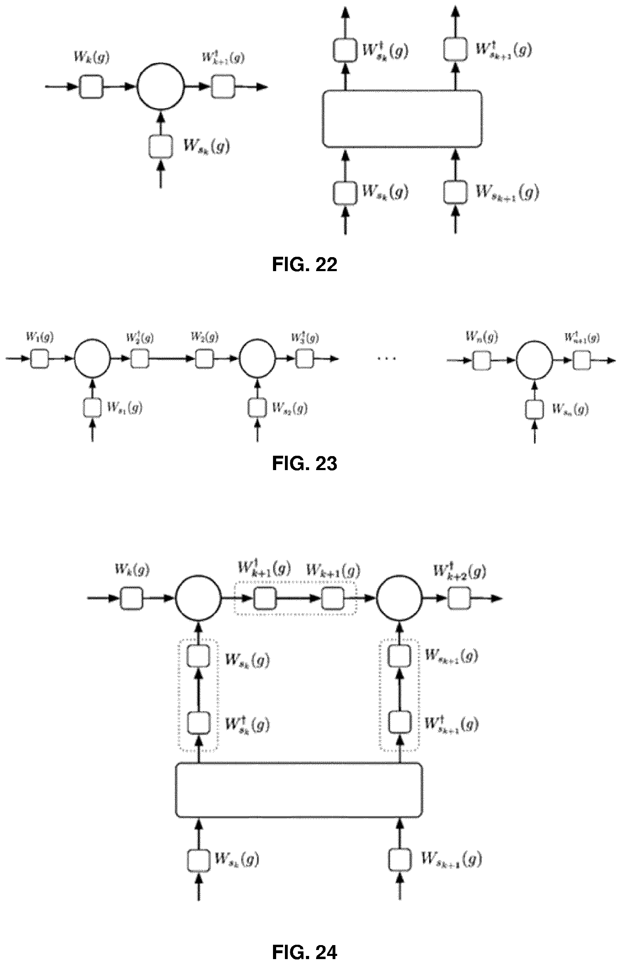

One has to come with a clever way to express these constraints as inherent symmetries in the initialization of the Matrix Product State. First, one needs to make sure that the right leg charges of a site k correspond to the left charges of the site $k+1$ to be able to perform tensor contractions. Moreover, the gates have to be created from the Ising Hamiltonian with charges identical to the physical charges of the matching sites (see FIGS. 22-24).

Once that is in mind, one needs to actually find a way to transform a given algebraic constraint to a symmetry through charges for the MPS. One knows that a site can either be a spin up or a spin down (more precisely for this kind of combinatorial problem a 0 or a 1 in final); thus, one has to keep track of every possibility starting from the top left site. Consider the example: $-x_1 + 2x_2 - x_3 = 1$, starting from a set of empty solution, one iteratively computes every possible combination:

$$\emptyset \xrightarrow{x_1} \{0,-1\} \xrightarrow{x_2} \{0,-1,2,1\} \xrightarrow{x_3} \{0,-1,2,1,-1,-2,1,0\} \xrightarrow{\mathcal{S}} 1$$

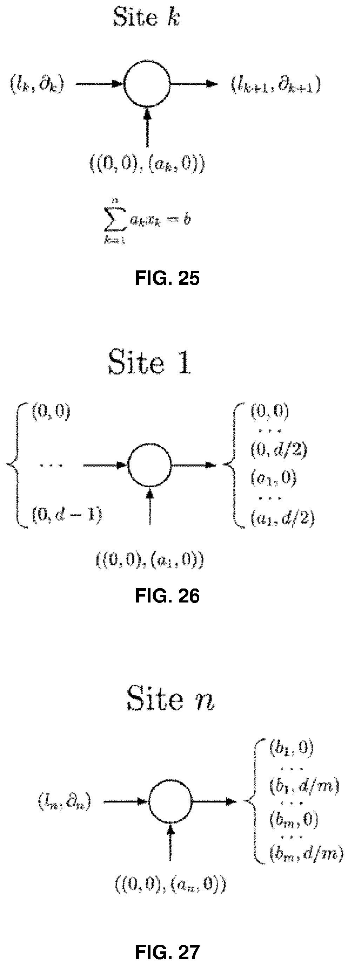

One sees that 2 sectors of symmetry actually fulfil the constraint ($x_1 = 1$, $x_2 = 1$, $x_3 = 0$) and ($x_1 = 0$, $x_2 = 1$, $x_3 = 1$). Extending the process for multiple constraints is straightforward as one considers tuples instead of integers. Physically, one is setting sectors with 0 degeneracy as in the FIGS. 25-27 and using the intersection of charges to set multiple constraints as one. Computationally speaking, one has to set each physical charges as an m-list (one element for each constraint) of 2-tuple elements (zero and the coefficient of this particle in the constraint): $(l_k, \partial_k) = \bigcup_{i=1}^m \{(0, A_{ik})\}$ for constraints $Ax = b$. Two important charges that need to be set properly, as they serve to impose the proper conservation of the number of particles for each constraint, are the first and last bond legs (represented by dummy legs in the MPS):

$(l_1, \partial_1) = \bigcup_{i=1}^m \{(0, 0)\}$ and $(l_{n+1}, \partial_{n+1}) = \bigcup_{i=1}^m \{(0, b_i)\}$. For the inner-bond legs, one needs to make sure there are enough matching elements to initialize the evolution before the singular value decomposition (SVD) truncation updates these ones properly.

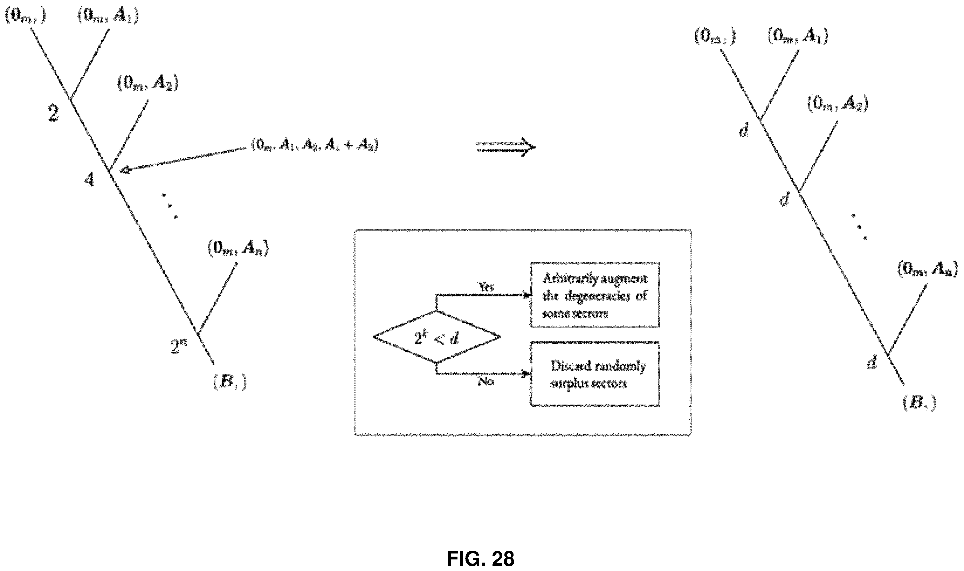

Unfortunately, one can see (in FIG. 28) that representing all possible matches would mean having to store 2, 4, ... $2^n$ charges to accurately catch the proper one. Thus, the bond dimension should be of size $2^n$ which is not possible as the main goal of using an MPS is to avoid storing an exponentially large number of parameters. One partial solution is to truncate (duplicate for the first sites) the combination iteratively as one constructs the charges to fit in the d dimension bond legs, but one can discard proper sectors that result in a nullification of the corresponding tensor coefficients before the first SVDs. This usually happens on the very last site where one has the physical charges and the right bond charges fixed as the last site constraint coefficients and the constraint equalities that cannot make a match with the upcoming charges from the penultimate site because of the truncation that got rid of sectors that would have matched.

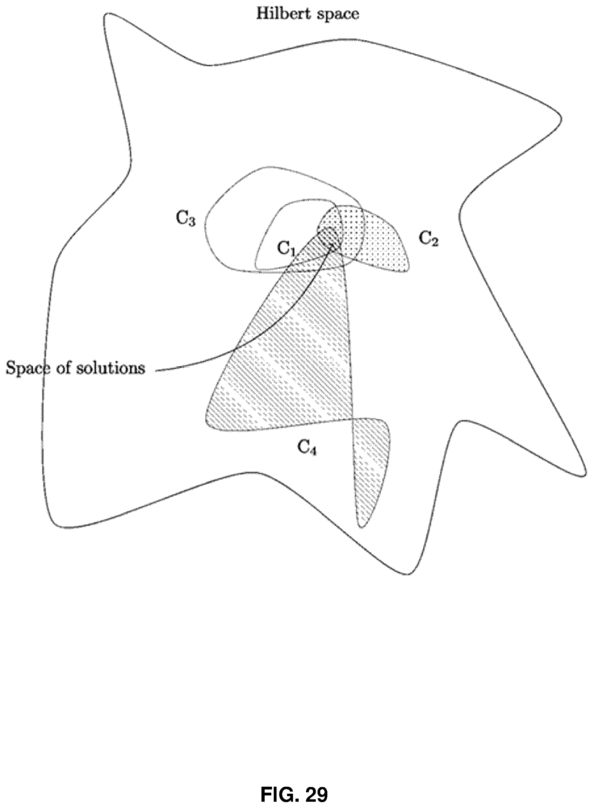

The goal is to use only the symmetry sectors to represent the solution. Thus, reducing the Hilbert space (see FIG. 29) to only a subspace of solutions leads to faster convergence and better results on average.

Let's have a look to the following constraints:

$$\begin{cases} 3x_1 - 8x_2 + 2x_3 + 2x_4 = 5 \\ x_3 + x_4 = 1 \\ -x_1 - x_2 = -1 \end{cases}$$

And transform them into the complete tree constraint structure:
(for the sake of simplicity we omit the degeneracy number and just have multiple times one charge amounting to the according degeneracy if so)

$\{(0,0,0),(3,0,-1)\}$ $\quad$ $\{(0,0,0),(-8,0,-1)\}$ $\quad$ $\{(0,0,0),(2,1,0)\}$ $\quad$ $\{(0,0,0),(2,1,0)\}$

$\{(0,0,0)\}$ ———————————————————— $\{(5,1,-1)\}$

$\{(0,0,0),(3,0,-1)\}$

$\{(0,0,0),(3,0,-1),(-8,0,-1),(-5,0,-2)\}$ $\quad$ $\{(0,0,0),(3,0,-1),\ (-8,0,-1),(-5,0,-2),\ (2,1,0),(5,1,-1),\ (-6,1,-2),(-3,1,-2)\}$ $\quad$ $\{(0,0,0),(3,0,-1),(-8,0,-1),(-5,0,-2),\ (2,1,0),(5,1,-1),(-6,1,-1),(-3,1,-2),\ (4,2,0),(7,2,-1),(-4,2,-2),(-1,2,-2)\}$

$\{(0,0,0),(3,0,-1)\}$ $\quad$ $\{(0,0,0),(-8,0,-1)\}$ $\quad$ $\{(0,0,0),(2,1,0)\}$ $\quad$ $\{(0,0,0),(2,1,0)\}$

$\{(0,0,0)\} \times 4$ ———————————————————— $\{(5,1,-1)\} \times 4$

$\{(0,0,0),(0,0,0),\ (3,0,-1),(3,0,-1)\}$ $\quad$ $\{(0,0,0),\cancel{(0,0,0)},\ \cancel{(3,0,-1)},(3,0,-1),\ \cancel{(-8,0,-1)},(-8,0,-1),\ (-5,0,-2),\cancel{(-5,0,-2)}\}$ $\quad$ $\{(0,0,0),\cancel{(3,0,-1)},\ (-8,0,-1),(-5,0,-2),\ \cancel{(2,1,0)},(5,1,-1),\ \cancel{(-6,1,-2)},\cancel{(-3,1,-2)}\}$ $\quad$ $\{\cancel{(0,0,0)},\ \cancel{(-8,0,-1)},\ (-5,0,-2),(5,1,-1),\ \cancel{(2,1,0)},(-6,1,-1),\ (-3,2,0),\cancel{(-4,2,-1)}\}$

## 6.2 Inequality constraints

$$^{c}Q: (x_1,\cdots,x_n) \in \mathbb{B}^n \longmapsto \sum_{i=1}^{n}\sum_{j=1}^{i} q_{ij}x_i x_j \in \mathbb{R}$$

$$\arg\min_{x\in\mathbb{B}^n} \quad f_Q(\boldsymbol{x}) = \boldsymbol{x}^\mathsf{T} Q\boldsymbol{x}$$
$$\text{s.t} \qquad A\boldsymbol{x} = B$$
$$C\boldsymbol{x} \leq D$$

A constrained problem with inequality constraints can be turned back into a simple constrained problem with only equality constraints. To do so, one has to add additional slack variables to the problem as follow:

$$C\boldsymbol{x} \leq D \iff C\boldsymbol{x} + \boldsymbol{s} = D$$

where $s$ is a set of variables $0 \leq s_i \leq B_i$ that can be written as binary expansions with additional $x$ binary variables.

$$s_i = \sum_{j=0}^{\lceil \log_2(B_i)\rceil} 2^j \tilde{x}_{ij}$$

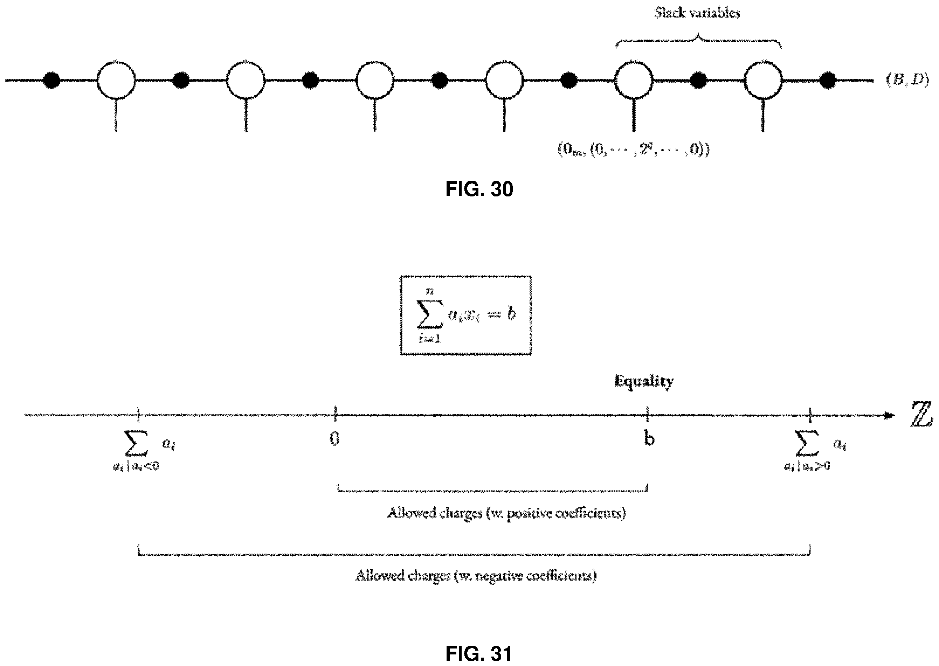

These $p$ slack variables (see FIG. 30) can be directly incorporated into the Matrix Product State as additional sites following the same initialization as for the equality constraints with the corresponding power of two coefficients only acting for one constraint.

Benchmarking with the quadratic knapsack problem, one finds that the symmetric TEBD is better than the standard TEBD focusing on the actual proper solution (even though based on how one initializes the symmetry sectors yet cannot get the optimal solution, and this is a matter of randomness if the correct sectors are not discarded).

## 7 Bounded charges

Moreover, constraints can not only have positive coefficients, in this case one can improve the way one initializes the MPS. When performing the fusion rule to create iteratively the charges whether it is from the left or the right, one can just discard the values that are already greater than the equality value and negative as they carry no physical sense in terms of the constraints. That would allow it to populate the MPS with only informative sectors. Indeed, using these bounded symmetry sectors impede the algorithm to fail when contracting gates with two sites because of the coherence of such charges. It is then possible to run complex QPLIB (a library of Quadratic Programming Instances) models without them not working and even enforce the constraints to be respected.

Using bounded charges is paramount to solving certain types of constraints when the charges are only ruled by a non-decreasing behavior. However, if there is one negative coefficient in the constraint, this approach is doomed to failure as one can go to the negative before (through the fusion rule) going back to the positive to match the rightmost charges - that is the equality of the constraint.

A partial solution is to compute the sum of negative coefficients and set it as the lower bound to the interval of allowed charges and the sum of positive coefficients as the upper bound. Indeed, this is the minimal and maximum value one can get with the fusion rule. One can explore further this idea and add conditions to discard charges or not based on the maximum charge value that one can reach with the right site not already initialized. For example, if one has a current charge of $c$, an equality value equal to $d$ the sum of all remained charges $s$ has to be $s \geq d - c$ to keep the charge $c$ otherwise this would not be a viable symmetry sector (see FIG. 31).

When the coefficients of the constraints are non-binary or far from zero the failure of the algorithm can still happen. The issue with the one site RDM is alleviated the more constraints there are; thus, the state found after each step is right at the beginning close to a product state. In fact, the way one initializes the MPS fixes the constraints as an inherent part of the MPS hence always fulfilling the constraints; this results in the capability to compute the actual state that makes it seems like they are not. The difficulty of initializing the MPS is linked to the difficulty of finding states that satisfy the constraints. Indeed, the initial MPS must be a superposition of feasible states. Finding feasible states may become difficult when the coefficients are random and particularly when there are many constraints.

## 8 Results

### 8.1 QPLIB Model (QUBO)

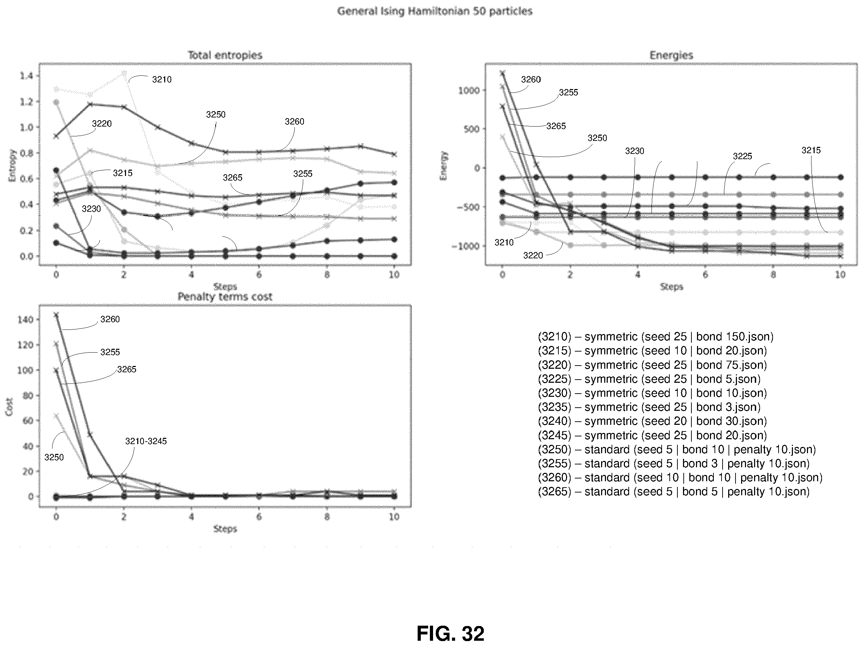

Before jumping to QPLIB Models, it is beneficial to look at general random Ising models. FIG. 32 shows plots of several results from the same Hamiltonian with a fixed number of particles (equal to ⅓ of the total number of sites) constraint. The first observation is that the total entropy of the system is rapidly going to zero for the symmetric MPS and the penalty terms cost is always equal to zero meaning that the constraint is satisfied at each step of the algorithm which is what one wants for the symmetric version of the TEBD. However, one can see that the final energy is almost not evolving for the symmetric case and that it is higher than the ones found with the standard method. A reason to that is, first, that the symmetry induced by the constraint inside the MPS restrains the total amount of parameters and thus it increases the gap between local minima (it is harder to escape them) because one can only represent states with satisfied constraints which can be very far away in terms of Hilbert space distance. Indeed, increasing the bond dimension can provide even better results until giving the best state possible. Using a faster library results in reaching these results at a very good speed. Furthermore, there is a penalty strength (Lagrange multiplier) that makes the standard TEBD converge and fulfil the constraint after a few iterations which is absolutely not the case in practice (e.g., in a portfolio optimization problem). FIG. 32 shows the following lines: line 3210 - symmetric (seed 25 | bond 150.json); line 3215 - symmetric (seed 10 | bond 20.json); line 3220 - symmetric (seed 25 | bond 75.json); line 3225 - symmetric (seed 25 | bond 5.json); line 3230 - symmetric (seed 10 | bond 10.json); line 3235 - symmetric (seed 25 | bond 3.json); line 3240 - symmetric (seed 20 | bond 30.json); line 3245 - symmetric (seed 25 | bond 20.json); line 3250 - standard (seed 5 | bond 10 | penalty 10.json); line 3255 - standard (seed 5 | bond 3 | penalty 10.json); line 3260 - standard (seed 10 | bond 10 | penalty 10.json); line 3265 - standard (seed 5 | bond 5 | penalty 10.json).

One has to be cautious regarding the energy of a non-constraint-satisfying state as it can be below the actual ground state. Here it is the case for one model (standard seed 5, bond 3) where the final state is not fulfilling the constraint. In the case of much more complicated models this can lead to misinterpretation if one is not wary enough.

With the bounded charges with symmetric MPS, running a long evolution leads to plateau of energy where the state is a quasi-product state until leaving the local minima. It, thus, leads to an unconstrained solution (as already discussed one assumes that this is because of this entangled state that cannot be accurately predicted by the one site reduced density matrix when computing it) before stabilizing into a new minima which is hopefully the ground state after a few iterations. Another issue encountered with "particle conservation" constraints (that is the number of spin-up particles, also known as the number of non-zero qubits which is fixed by the constraint) is that the system seems to get stuck in the subspace that fulfils the constraints but advantages the rightmost sites. Fortunately, this does not seem to happen with more local constraints acting only on a few sites but still fails on constraints acting on distant sites (QPLIB Model 3815).

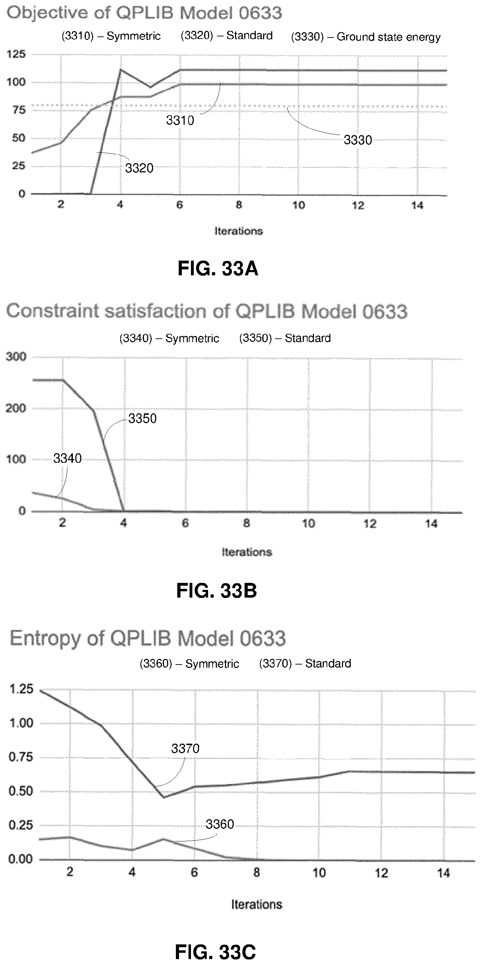

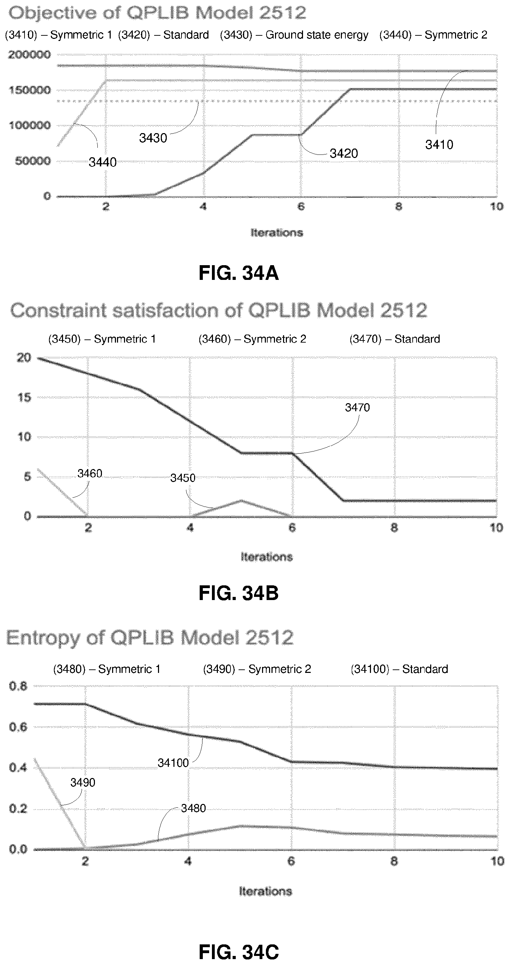

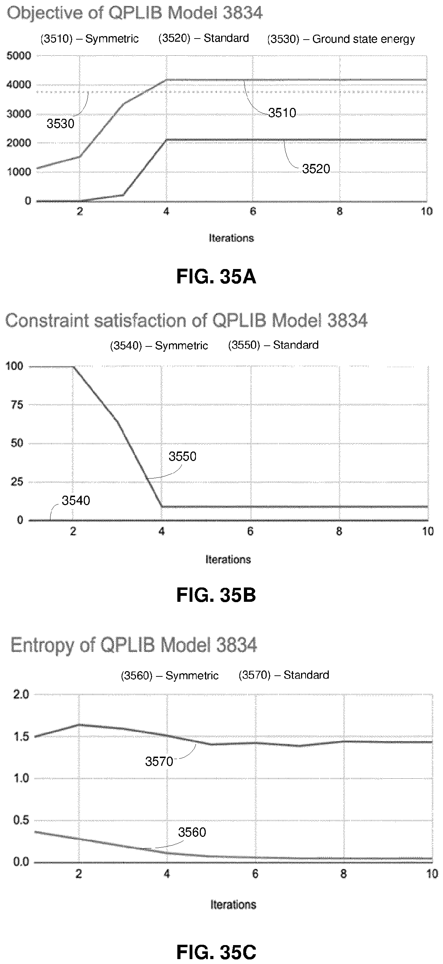

On the plots in FIGS. 33A-33C, 34A-34C, and 35A-35C, one can see that sometimes the final state for the standard MPS is below the ground state energy or the symmetric MPS one; this is because the constraints are not all fulfilled thus leading to a minimization of the problem that has a smaller objective. The constraint satisfaction plots are showing the quadratic residue of the penalty terms with 0 being when all constraints are satisfied. FIGS. 33A-33C show the following lines: lines 3310, 3340, 3360 - Symmetric; lines 3320, 3350, 3370 - Standard; lines 3330 - Ground state energy). FIGS 34A-34C show the following lines: lines 3410, 3450, 3480 - Symmetric 1; lines 3420, 3470, 34100 - Standard; line 3430 - Ground state energy; lines 3440, 3460, 3490 - Symmetric 2). FIGS. 35A-35C show the following lines: lines 3510, 3540, 3560 - Symmetric; lines 3520, 3550, 3570 - Standard; line 3530 - Ground state energy.

In every model, the entropy, the constraint, and the energy are better than the standard one with a faster convergence. The standard MPS runs were selected to be the best of all runs while the symmetric ones are essentially not selected and just a one-go run. Using the symmetric backend, one can satisfy constraints that were never fulfilled even with the penalty strength scheduler (for example with QPLIB Model 3834). Coming up with an even smarter way to initialize the MPS, one can easily solve most of the problems that one encounters especially with non-binary coefficient constraints that are still a big issue (Model 0067).

## 8.2 Portfolio Optimization

The portfolio optimization problem is the process of finding the best distribution of given assets (portfolio) out of all feasible portfolios according to some objective like maximizing the return and minimizing the financial risk. Mathematically, in an attempt to find the optimal solution for a given number of assets data (their correlation, return, and volatility), one tries to solve the following optimization problem.

$$\arg\min_{\boldsymbol{w}} -\boldsymbol{w}\boldsymbol{r} + \gamma\boldsymbol{w}^{\mathsf{T}}\Sigma\boldsymbol{w}$$
$$\text{s.t} \quad \sum_i w_i = 1$$

With $r$ the logarithmic return, $\gamma$ the risk aversion factor and $\Sigma$ the covariance matrix of the assets.

Using a Lagrange multiplier, this problem can be mapped into an equivalent QUBO problem.

$$\arg\min_{\boldsymbol{w}} -\boldsymbol{w}\boldsymbol{r} + \gamma\boldsymbol{w}^{\mathsf{T}}\Sigma\boldsymbol{w} + \lambda\|\boldsymbol{w}-\boldsymbol{1}\|_{L^2}^2 = -\boldsymbol{w}\boldsymbol{r} + \gamma\boldsymbol{w}^{\mathsf{T}}\Sigma\boldsymbol{w} + \lambda\left(\sum_i w_1 - 1\right)^2$$

In the general implementation of the problem used here, one uses a resolution (between 0.01 and 0.1) to convert the problem to an integer formulation. Basically, one uses a maximum holding value $p_{\max}$ and a resolution r thus finding the maximum integer holding that the assets can take $w_{\max} = \lfloor p_{\max}/r \rfloor$. The binary expansion of this value induces the number of qubit variables needed to represent the holding of one asset, $m_h = \lceil \log_2(w_{\max}) \rceil$ thus a total number of $N = nm_h$ variables for $n$ assets. A direct improvement is to use integer variables instead of binary ones which is a straightforward implementation, but here it is implemented with qubits.

As shown above, the portfolio optimization application consists of a constrained optimization problem with one constraint. This constraint can be seen as a $U(1)$ symmetry the same way as with the QPLIB models used to benchmark the symmetries. Minimizing the objective gives a distribution of assets that minimizes the financial risk and maximizes the return. Graphically, for all possible portfolios, one wants the solution to be following the "efficient frontier" that is the set of optimal portfolios offering the maximum expected return for a given defined risk aversion factor.

The symmetric reformulation of the problem allows one to remove the penalty terms from the objective function and embed them directly into the Matrix Product State. The main result is that any solution will have the property of having the constraint satisfied which is the most difficult part to account for with the standard TEBD algorithm. Indeed, the penalty strength lambda is a parameter that one has to optimize as well to get results satisfying the constraint. For the portfolio optimization problem, this value is difficult to find and is bound in a very precise range which changes with each problem. Using the symmetric TEBD, one removes this parameter and has the constraint always fulfilled. The drawback of the symmetries is that one has a really small set of parameters in the MPS to fully represent the ground state as jumping from one local minimum to another, which is much more difficult (these solutions are far separated in the Hilbert space). One may, for example, run simulations for longer (thus switching to a faster library for symmetric tensors) using the adaptive trotter delta explained herein, increase the bond dimension, and so on. However, results show that even with this issue, one can get really close to the actual efficient frontier for most of the runs when dealing with a small number of assets. It is expected that using more assets may lead to less close to the ground state states and one might have to increase the bond dimension appropriately.

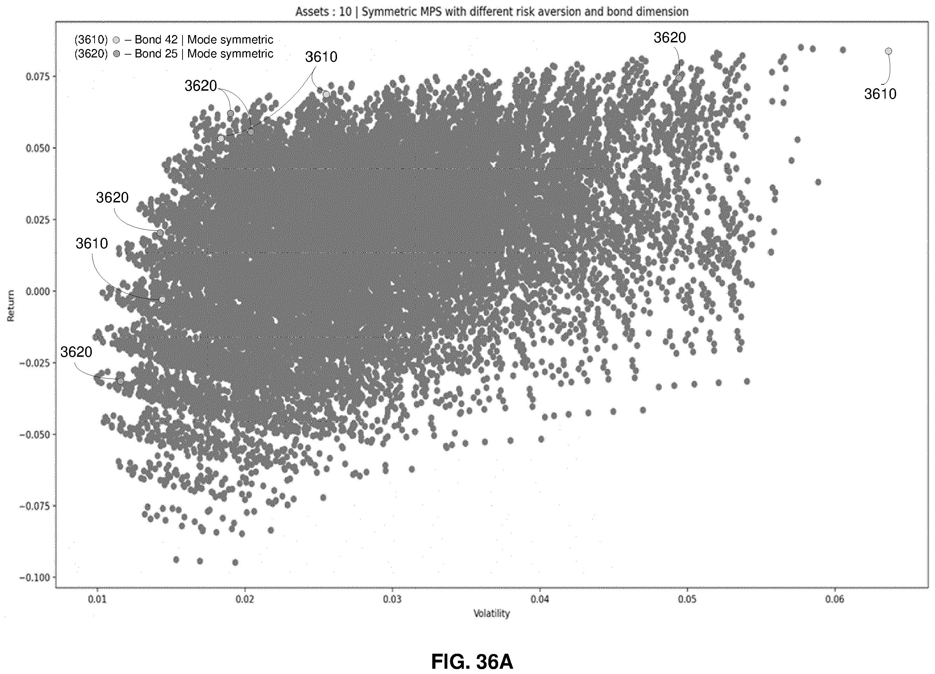

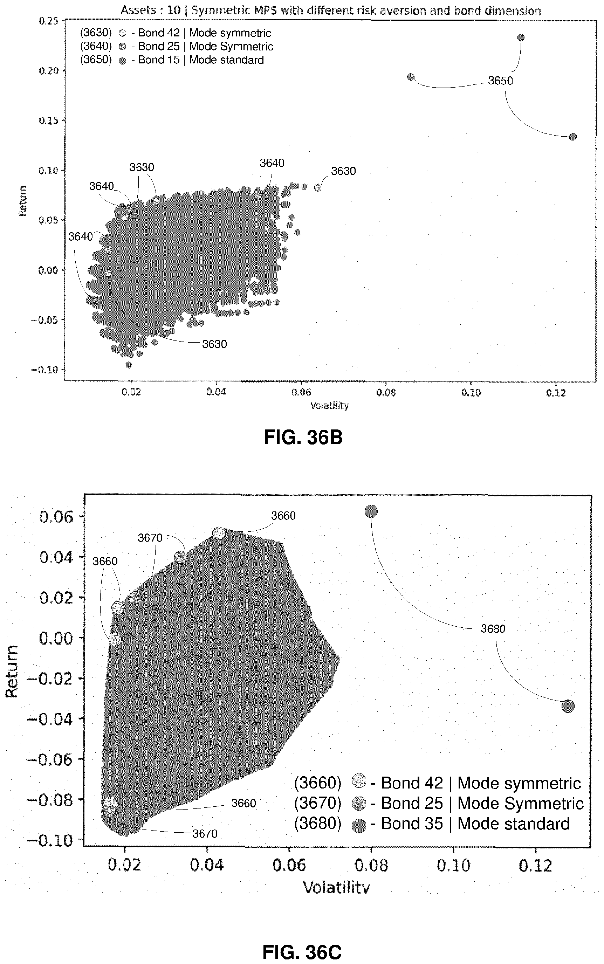

The portfolio optimization problem was benchmarked with the symmetric TEBD using 5 and 10 assets (500 assets is still out of reach with the actual slow computation of the tensornetwork library for symmetric tensors and without the use of parallelization libraries such as Jax). FIGS. 36A-36C represents most of the feasible portfolios that satisfy the constraint with the efficient frontier being the points encompassing the upper curve. Representing exhaustively all portfolios is difficult especially for high risk aversion, which is why the right part of the graph is lacking points. Using bond dimension 25 and 42, one can get almost optimal portfolios in every case for 10 assets and a resolution of 0.01. Increasing the bond dimension allows to get even better results.

Running again but with a lower resolution this time (only 0.1), one gets the same kind of results but this time one gets even better results. A very interesting point is that the standard TEBD is absolutely not able to fulfil the constraint even with a refined penalty strength, highlighting even more the efficiency of symmetric MPS. For 5 assets, one does not need a very large bond dimension to get an optimal solution, and a bond dimension of 25-50 is enough to follow scrupulously the efficient frontier. Thus, the more assets the bigger the bond dimension needs to be and the symmetric implementation of MPS will once again be useful as it scales much better than traditional MPS especially for large bond dimensions. Solving all the issues described about the slowness of the actual implementation may result in progress towards big models with hundreds or even thousands of assets. The same ones were plotted but with Gurobi solutions to get the exact efficient frontier. FIGS. 36A-36C show the following points: points 3610 - Bond 42 | Mode symmetric; points 3620 - Bond 25 | Mode symmetric; points 3630 - Bond 42 | Mode symmetric; points 3640 - Bond 25 | Mode Symmetric; points 3650 - Bond 15 | Mode standard; points 3660 - Bond 42 | Mode symmetric; points 3670 - Bond 25 | Mode Symmetric; points 3680 - Bond 35 | Mode standard.

The idea is then to extend to more assets (extracting from the 500 assets data) to see how the algorithm scales in terms of distance to the efficient frontier with the algorithm used (without adaptive trotter delta, fix bond dimension...). For 20 assets, the results are not as good as previously as expected with the poor number of parameters of the MPS. There exists a tradeoff between the bond dimension that one chooses and how the evolution goes; the bigger it is the more time and more advanced methods to make the state jump to other minima is needed. Thus, bond dimension 150 has an optimal solution while the other has not but also has the most suboptimal solution (the dot at the bottom). However, the results are still close to the efficient frontier, contrary to the exhaustive portfolios that cannot reach it. Also, these points are just the first solution that are obtained with a fulfilled constraint (it is always satisfied but the 1 site RDM makes it difficult to get it at first so one just evolves a few steps until the state has a lower entropy and gives a proper result), so running for longer time with adaptive methods would get even better results.

## 9 Problems

The truncation and the way the singular value decomposition operates on each site going from the very left to the right generate a recurrent issue for most of the model. Indeed, when the constraints are not local - that is, acting only on a few next-neighbor gates each - the contraction of sites and gates cannot always be satisfied as the matching set of quantum numbers results to be empty. One has to find a way to bypass this issue and make the Symmetric TEBD able to handle any kind of problems.

A strange behavior of the symmetric optimization is that the greater the bond dimension the more rightmost sites are in state 1 while none of the left ones are even if the ground state needs spin up sites among the left part of the MPS. Also, with higher bond dimension the TEBD algorithm takes more time to stabilize and fulfil the constraints (this may be that there are more parameters thus the state of the first few iterations is more entangled and then the one site reduced density matrix to compute the current state is not performing well to grasp the true state underlying that is actually satisfying the constraints).

## 10 Perspectives & Ideas

A first idea general to the TEBD algorithm is to use a second order Trotter decomposition of the time evolution operator to reduce the Trotter error to the next order of magnitude. This may help converging even faster with and without symmetric Matrix Product States. However, a tradeoff has to be considered between the number of gates induced by higher order TEBD especially when going to TEBD 4 or more.

Using the multi-sites reduced density matrix to compute the ground state at the end of the evolution may be considered as the constraints are not always fulfilled using only a one-site reduced density matrix. The reason might be because the symmetry is acting on the whole MPS as opposed to trying to get probabilities for a single site each time thus catching a local property while the MPS is under global symmetry.

Most of the time, constraints only act on a specific number of sites resulting in zeros carried to the end of the MPS for these particular constraints. Thus, after the last site is passed in the initialization, one can just check if the corresponding constraint equality values are reached and discard the others after continuing for all other constraints in the rest of the MPS.

An example of pseudocode is provided below for a simple symmetric U(1) TEBD optimizer (not optimized in SWAP gates):

*Input: Initial state $|\psi\rangle$, time step $\Delta t$, total evolution time T, maximum bond dimension D*

*1. Initialize:*

- *Construct a charge-conserving MPS $|\Psi\rangle$ for the initial state $|\Psi\rangle$ with a specified maximum bond dimension D.*
- *Choose the initial time t = 0.*

*2. Perform time evolution:*
*while t < T do*

    *for each pair of qubits (i, j) do*

- *Use SWAP gates to bring qubits i and j together if needed.*
- *Apply a U(1)-symmetric two-body gate G ij to qubits i and j.*
- *Perform a Schmidt decomposition on the bond between qubits i and j.*
- *Truncate the Schmidt coefficients to keep the largest D coefficients.*
- *Update the MPS tensors T_i and T_j using the truncated Schmidt decomposition.*
- *Use SWAP gates to return the qubits i and j to their original positions.*

    *end for*

- *Update the time t = t + $\Delta t$.*

*end while*

*3. Output:*

- *The final state $|\Psi(T)\rangle$ obtained after the total evolution time T.*

## 11 Conclusion

Symmetries by their very nature are a key to take into account the underlying conserved quantities and they can be accurately embedded into tensor networks. To this regard, finding a way to transform a linear constraint into a symmetry and initializing an MPS to account for it allows a reduction of a given constrained problem to a simple unconstrained problem without having to care about Lagrange multipliers as in the QUBO reformulation. One gets results always satisfying all constraints while giving a proper approximation of the ground state of the considering Hamiltonians. However, some issues still arise: for some kind of constraints with highly different coefficients the initialization can still fail and it is needed to find an even better way of creating the MPS. Furthermore, the problem with one site RDM can lead to wrong state not satisfying the constraints even though the underlying MPS is actually well symmetric and thus fulfilling them. Another point is that right at the beginning one is exactly in a local minimum that can be improved using multiple seed runs to mitigate the solutions or increasing the bond dimension consequently. However, the state seems not to evolve drastically after that; one may use the adaptive trotter delta to boost the state to jump from local minima to other and finding the accurate ground state.

**TABLE 1**

| Pros | Cons | Ideas |
|---|---|---|
| Focus on symmetry sectors accounting for constraints satisfaction. | Way slower than standard MPS with the tensornetwork library | Switch to blockwise sparse tensor with the abelian tensor library to improve runtimes |
| Can handle inequality constraints as well as equality constraints easily | Heavily rely on the initialization of the symmetric MPS | Find a better way to initialize the charges for more general constraints |

(continued)

| Pros | Cons | Ideas |
|---|---|---|
| Seem to converge faster as for the number of iterations | Struggle with non binary coefficient constraints | Adaptive bond dimension |
| Perform well on portfolio-like optimization problems | Not accurate more probable state for quite highly entangled states (especially at the beginning and when leaving local minima) | Using multiple-site reduced density matrix to get proper probable state |

Advantageously, at least some of the embodiments described herein use tensor networks to satisfy constraints directly. The constraints can be understood as symmetries in the tensors. The symmetries imply that some of the coefficients of the tensors in the tensor network are zero, and when they are implemented directly at the level of the tensor network, they imply that any LaGrange multipliers are not required. These embodiments can improve computational performance, efficiency, energy consumption, etc. for the most complex optimization problems in logistics. The programs that implement these embodiments may minimize memory use and allow for obtaining optimization solutions much faster.

While the applicant's teachings described herein are in conjunction with various embodiments for illustrative purposes, it is not intended that the applicant's teachings be limited to such embodiments as the embodiments described herein are intended to be examples. On the contrary, the applicant's teachings described and illustrated herein encompass various alternatives, modifications, and equivalents, without departing from the embodiments described herein, the general scope of which is defined in the appended claims.

**Bibliography**

[1] Román Orús, A Practical Introduction to Tensor Networks: Matrix Product States and Projected Entangled Pair States; https://aroiv.org/abs/1306.2164

[2] Philipp Schmoll, Sukhbinder Singh, Matteo Rizzi, and Román Orús, A programming guide for tensor networks with global SU(2) symmetry; https://arxiv.org/abs/1809.08180

[3] Guifré Vidal, Classical simulation of infinite-size quantum lattice systems in one spatial dimension; https://arxiv.org/abs/cond-mat/0605597

[4] Guifré Vidal, Efficient classical simulation of slightly entangled quantum computations; https://arxiv.org/abs/quant-ph/0301063

[5] Guifré Vidal, Efficient simulation of one-dimensional quantum many-body systems; https://arxiv.org/abs/quant-ph/0310089

[6] Johannes Hauschild, and Frank Pollmann, Efficient numerical simulations with Tensor Networks: Tensor Network Python (TeNPy); https://www.researchgate.net/publication/324887109_Efficient_numerical_sim ulations_with_Te nsor_Networks_Tensor_Network_Python_TeNPy

[7] Brent Sprangers and Nick Vannieuwenhoven, Group-Invariant Tensor Train Networks For Supervised Learning; https://arxiv.org/abs/2206.15051

[8] Johnnie Gray and Garnet Kin-Lic Chan, Hyper-optimized compressed contraction of tensor networks with arbitrary geometry; https://inspirehep.net/literature/2096203

[10] G. Alvarez, Implementation of the SU(2) Hamiltonian Symmetry for the DMRG Algorithm; https://arxiv.org/abs/1003.1919

[11] Simone Montangero, Introduction to Tensor Network Methods Numerical Simulations of LowDimensional Many-Body Quantum Systems; https://www.amazon.es/Introduction-Tensor-Network-Methods-lowdimensional/dp/3030014088

[12] Pietro Silvi , Enrique Rico, Tommaso Calarco, Simone Montangero, Lattice Gauge Tensor Networks; https://arxiv.org/abs/1404.7439?context=hep-lat

[13] Raffael Gawatz, Matrix Product State Based Algorithms for Ground States and Dynamics; https://www.nbi.ku.dk/english/theses/rnasters-theses/raffael-gawatz/RGawatz_Msc.pdf

[14] Chu Guo and Dario Poletti, Matrix Product States with adaptive global symmetries; https://arxiv.org/abs/1905.01609

[15] A. Weichselbaum, Non-abelian symmetries in tensor networks: a quantum symmetry space approach; https://arxiv.org/abs/1202.5664

[16] L. Tagliacozzo , Thiago. R. de Oliveira, S. Iblisdir and J. I. Latorre, Scaling of entanglement support for Matrix Product States; https://arxiv.org/abs/0712.1976

[17] Dewolf Nicolas, Spatial Symmetries and Symmetry Breaking with Matrix Product States; https://libstore.ugent.be/fulltxt/RUG01/002/782/900/RUG01-002782900_2019_0001_AC.pdf

[18] D. Pérez-García, M.M. Wolf, M. Sanz, F. Verstraete, J.I. Cirac, String order and symmetries in quantum spin lattices; https://arxiv.org/abs/0802.0447

[19] Sukhwinder Singh, Robert N. C. Pfeifer, and Guifré Vidal, Tensor network decompositions in the presence of a global symmetry; https://arxiv.org/abs/0907.2994

[20] Sukhwinder Singh, Tensor network states and algorithms in the presence of a global SU(2) symmetry; https://link.aps.org/doi/10.1103/PhysRevB.86.195114

[21] Sukhwinder Singh, Robert N. C. Pfeifer, and Guifre Vidal, Tensor network states and algorithms in the presence of a global U(1) symmetry; https://link.aps.org/doi/10.1103/PhysRevB.83.115125

[22] Sukhbinder Singh, Tensor Network States and Algorithms in the presence of Abelian and non-Abelian Symmetries; https://arxiv.org/abs/1203.2222

[23] L. Tagliacozzo, A. Cell and M. Lewenstein, Tensor Networks for Lattice Gauge Theories with Continuous Groups; https://arxiv.org/abs/1405.4811

[24] P. Silvi, F. Tschirsich, M. Gerster, J. Jünemann, D. Jaschke, M. Rizzi, S. Montangero, The Tensor Networks Anthology: Simulation techniques for many-body quantum lattice systems; https://arxiv.org/abs/1710.03733

[25] Sebastian Paeckela, Thomas Köhlera, Andreas Swobodac, Salvatore R. Manmanaa, Ulrich, Time-evolution methods for matrix-product states; https://arxiv.org/pdf/1901.05824

[26] Román Orús, Samuel Mugel, and Enrique Lizaso, Quantum computing for finance: overview and prospects; https://www.researchgate.net/publication/331307552_Quantum_computing_fo r finance_Overview and_prospects

[27] Chenfeng Ca, Zheng An, Shi-Yao Hou, D. L. Zhou and Bei Zeng, Quantum imaginary time evolution steered by reinforcement learning; https://www.nature.com/articles/s42005-022-00837-y

[28] Johannes Jakob Meyer, Marian Mularski, Elies Gil-Fuster, Antonio Anna Mele, Francesco Arzani, Alissa Wilms, and Jens Eisert, Exploiting symmetry in variational quantum machine learning; https://ui.adsabs.harvard.edu/abs/2022arXiv220506217M/abstract

[29] L. Tagliacozzo and G. Vida, Entanglement renormalization and gauge symmetry; https://arxiv.org/abs/1007.4145

[30] Schollwöckc, Claudius Hubig, Time-evolution methods for matrix-product states; https://arxiv.org/pdf/1901.05824

[31] Robert N. C. Pfeifer, Symmetry-Protected Local Minima in Infinite DMRG; https://arxiv.org/abs/1505.06266

[32] Fred Glover, Gary Kochenberger, Yu Du, Quantum Bridge Analytics I: A Tutorial on Formulating and Using QUBO Models; https://arxiv.org/pdf/1811.11538

[33] Geoffrey G Chu, Improving Combinatorial Optimization; https://minerva-access.unimelb.edu.au/handle/11343/36679

[34] Mario Motta, Chong Sun, Adrian T. K. Tan, Matthew J. O'Rourke, Erika Ye, Austin J. Minnich, Fernando G. S. L. Brandão, and Garnet Kin-Lic Chan, Determining eigenstates and thermal states on a quantum computer using quantum imaginary time evolution ; https://arxiv.org/abs/1901.07653

**Claims**

1. A system for minimizing an objective function with constraints using an optimal tensor network configuration with symmetries, the system comprising:

   a non-transitory computer-readable memory; and
   a processor in communication with the memory storing program instructions that, when executed by a processor, causes the processor to:

   receive an objective function and one or more constraints for optimization;
   generate a time evolution block decimation (TEBD) process based on the objective function without the one or more constraints;
   generate a tensor network based on the objective function with symmetries to satisfy the one or more constraints; and
   find the optimal tensor network that optimizes the objective function using the TEBD process.

2. The system of claim 1, wherein generating the tensor network comprises applying the symmetries to transform the objective function into an unconstrained quadratic unconstrained binary optimization (QUBO) model.

3. The system of claim 1 or claim 2, wherein generating the tensor network comprises adding additional sites to the tensor network.

4. The system according to any one of claims 1 to 3, wherein finding the optimal tensor network uses the TEBD process.

5. The system according to any one of claims 1 to 4, wherein finding the optimal tensor network further comprises using an adaptive trotter scheduler in conjunction with the TEBD process.

6. The system accordingly to any one of claims 1 to 5, wherein the adaptive trotter delta scheduler comprises a reducer, a stagnater, and a deepener.

7. The system of claim 6, wherein at least one of the reducer, the stagnater, or the deepener comprises modifying a trotter delta in the TEBD process.

8. A computer-implemented method for minimizing an objective function with constraints using an optimal tensor network configuration with symmetries, the method comprising:

   receiving an objective function and one or more constraints for optimization;
   generating a time evolution block decimation (TEBD) process based on the objective function without the one or more constraints;
   generating a tensor network based on the objective function with symmetries to satisfy the one or more constraints; and
   finding the optimal tensor network that optimizes the objective function using the TEBD process.

9. The system of claim 8, wherein generating the tensor network comprises applying the symmetries to transform the objective function into an unconstrained quadratic unconstrained binary optimization (QUBO) model.

10. The system of claim 8 or claim 9, wherein generating the tensor network comprises adding additional sites to the tensor network.

11. The system according to any one of claims 8 to 10, wherein finding the optimal tensor network uses the TEBD process.

12. The system according to any one of claims 8 to 11, wherein finding the optimal tensor network further comprises using an adaptive trotter scheduler in conjunction with the TEBD process.

13. The system accordingly to any one of claims 8 to 12, wherein the adaptive trotter delta scheduler comprises a reducer, a stagnater, and a deepener.

14. The system of claim 13, wherein at least one of the reducer, the stagnater, or the deepener comprises modifying a trotter delta in the TEBD process.

**FIG. 1**

EP 4 575 843 A1

FIG. 2

FIG. 3

QPLIB 5881, QPLIB 5882, QPLIB 5875, QPLIB 3852 and QPLIB 5909

FIG. 4

FIG. 5

$$\rho_k$$

$$\begin{pmatrix} p_0 & * \\ * & p_1 \end{pmatrix}$$

$$\rho_k^{(3)}$$

$$2^3 = 8 \left\{ \begin{pmatrix} p_{000} & \cdots & * \\ \vdots & \ddots & \vdots \\ * & \cdots & p_{111} \end{pmatrix} \right.$$

$$\underbrace{\phantom{xxxxxxxx}}_{2^3 = 8}$$

Sliding Window

Size

Shift

FIG. 6

**FIG. 7**

**FIG. 8**

900

$$\forall i \in \mathbb{I}_2, i = (l, \partial)$$

$$\forall i \in \mathbb{I}_1, i = (l, \partial)$$

$$\forall i \in \mathbb{I}_5, i = (l, \partial)$$

$$\forall i \in \mathbb{I}_3, i = (l, \partial)$$

$$\forall i \in \mathbb{I}_4, i = (l, \partial)$$

$$=$$

$W_1(g)$  $W_2(g)$

$W_5^t(g)$

$W_3(g)$

$W_4^t(g)$

**FIG. 9**

EP 4 575 843 A1

FIG. 10

**FIG. 12**

**FIG. 11**

FIG. 13

FIG. 14

General Ising Model

100 Sites / 2345 Operations

**FIG. 15**

General Ising Model

12 Sites

**FIG. 16**

Step runtime with 1 Gate

FIG. 17

Symmetric vs Precomputed Symmetric

(1810) – Symmetric (bond 25)
(1815) – Precomputed Symmetric (bond 25)
(1820) – Symmetric (bond 50)
(1825) – Precomputed Symmetric (bond 50)
(1830) – Symmetric (bond 10)
(1835) – Precomputed Symmetric (bond 10)
(1840) – Symmetric (bond 100)
(1845) – Precomputed Symmetric (bond 100)
(1850) – Symmetric (bond 250)
(1855) – Precomputed Symmetric (bond 250)

FIG. 18

**FIG. 19**

EP 4 575 843 A1

# Gate contraction

(2010) - Standard      (2020) – Symmetric without precomputation      (2030) – Symmetric with precomputation

**FIG. 20**

# Standard and Symmetric with precomputation

(2110) - Standard          (2120) – Symmetric with precomputation

**FIG. 21**

**FIG. 22**

**FIG. 23**

**FIG. 24**

$$\text{Site } k$$

$$\sum_{k=1}^{n} a_k x_k = b$$

**FIG. 25**

$$\text{Site } 1$$

**FIG. 26**

$$\text{Site } n$$

**FIG. 27**

FIG. 28

EP 4 575 843 A1

Hilbert space

$C_3$

$C_1$

$C_2$

Space of solutions

$C_4$

**FIG. 29**

Slack variables

$(0_m, (0, \cdots, 2^q, \cdots, 0))$

**FIG. 30**

$$\sum_{i=1}^{n} a_i x_i = b$$

Equality

$\mathbb{Z}$

$\sum_{a_i \mid a_i < 0} a_i$

$0$

$b$

$\sum_{a_i \mid a_i > 0} a_i$

Allowed charges (w. positive coefficients)

Allowed charges (w. negative coefficients)

**FIG. 31**

EP 4 575 843 A1

General Ising Hamiltonian 50 particles

FIG. 32

(3210) – symmetric (seed 25 | bond 150.json)
(3215) – symmetric (seed 10 | bond 20.json)
(3220) – symmetric (seed 25 | bond 75.json)
(3225) – symmetric (seed 25 | bond 5.json)
(3230) – symmetric (seed 10 | bond 10.json)
(3235) – symmetric (seed 25 | bond 3.json)
(3240) – symmetric (seed 20 | bond 30.json)
(3245) – symmetric (seed 25 | bond 20.json)
(3250) – standard (seed 5 | bond 10 | penalty 10.json)
(3255) – standard (seed 5 | bond 3 | penalty 10.json)
(3260) – standard (seed 10 | bond 10 | penalty 10.json)
(3265) – standard (seed 5 | bond 5 | penalty 10.json)

Objective of QPLIB Model 0633

(3310) – Symmetric      (3320) – Standard      (3330) – Ground state energy

Iterations

**FIG. 33A**

Constraint satisfaction of QPLIB Model 0633

(3340) – Symmetric      (3350) – Standard

Iterations

**FIG. 33B**

Entropy of QPLIB Model 0633

(3360) – Symmetric      (3370) – Standard

Iterations

**FIG. 33C**

## Objective of QPLIB Model 2512

(3410) – Symmetric 1  (3420) – Standard  (3430) – Ground state energy  (3440) – Symmetric 2

Iterations

**FIG. 34A**

## Constraint satisfaction of QPLIB Model 2512

(3450) – Symmetric 1  (3460) – Symmetric 2  (3470) – Standard

Iterations

**FIG. 34B**

## Entropy of QPLIB Model 2512

(3480) – Symmetric 1  (3490) – Symmetric 2  (34100) – Standard

Iterations

**FIG. 34C**

Objective of QPLIB Model 3834

(3510) – Symmetric    (3520) – Standard    (3530) – Ground state energy

Iterations

**FIG. 35A**

Constraint satisfaction of QPLIB Model 3834

(3540) – Symmetric    (3550) – Standard

Iterations

**FIG. 35B**

Entropy of QPLIB Model 3834

(3560) – Symmetric    (3570) – Standard

Iterations

**FIG. 35C**

Assets : 10 | Symmetric MPS with different risk aversion and bond dimension

**FIG. 36A**

EP 4 575 843 A1

**FIG. 36B**

**FIG. 36C**

**EUROPEAN SEARCH REPORT**

Application Number

EP 23 38 3328

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LARRY HUYNH ET AL: "Quantum-Inspired Machine Learning: a Survey", ARXIV.ORG, CORNELL UNIVERSITY LIBRARY, 201 OLIN LIBRARY CORNELL UNIVERSITY ITHACA, NY 14853, 8 September 2023 (2023-09-08), XP091607879, * page 2, left-hand column, last paragraph * | 1-14 | INV.<br>G06F17/12<br>G06F17/16<br>G06N5/01<br>G06N10/20<br>G06N10/60 |
| A | SYMONS BENJAMIN C B ET AL: "A practitioner's guide to quantum algorithms for optimisation problems", JOURNAL OF PHYSICS A: MATHEMATICAL AND THEORETICAL, IOP PUBLISHING, BRISTOL, GB, vol. 56, no. 45, 18 October 2023 (2023-10-18), XP020481364, ISSN: 1751-8113, DOI: 10.1088/1751-8121/AD00F0 [retrieved on 2023-10-18] * page 14, paragraph 1 - page 15, last paragraph * | 1-14 | |

**TECHNICAL FIELDS SEARCHED (IPC)**

G06F
G06N

The present search report has been drawn up for all claims

| Place of search | Date of completion of the search | Examiner |
|---|---|---|
| Munich | 31 May 2024 | Herri, Edmond |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROMÁN ORÚS**. *A Practical Introduction to Tensor Networks: Matrix Product States and Projected Entangled Pair States*, https://aroiv.org/abs/1306.2164
- **PHILIPP SCHMOLL** ; **SUKHBINDER SINGH** ; **MATTEO RIZZI** ; **ROMÁN ORÚS**. *A programming guide for tensor networks with global SU(2) symmetry*, https://arxiv.org/abs/1809.08180
- **GUIFRÉ VIDAL**. *Classical simulation of infinite-size quantum lattice systems in one spatial dimension*, https://arxiv.org/abs/cond-mat/0605597
- **GUIFRÉ VIDAL**. *Efficient classical simulation of slightly entangled quantum computations*, https://arxiv.org/abs/quant-ph/0301063
- **GUIFRÉ VIDAL**. *Efficient simulation of one-dimensional quantum many-body systems*, https://arxiv.org/abs/quant-ph/0310089
- **JOHANNES HAUSCHILD** ; **FRANK POLLMANN**. *Efficient numerical simulations with Tensor Networks: Tensor Network Python (TeNPy)*, https://www.researchgate.net/publication/324887109_Efficient_numerical_sim ulations_with_Tensor_Networks_Tensor_Network_Python_TeNPy
- **BRENT SPRANGERS** ; **NICK VANNIEUWENHOVEN**. *Group-Invariant Tensor Train Networks For Supervised Learning*, https://arxiv.org/abs/2206.15051
- **JOHNNIE GRAY** ; **GARNET KIN-LIC CHAN**. *Hyper-optimized compressed contraction of tensor networks with arbitrary geometry*, https://inspirehep.net/literature/2096203
- **G. ALVAREZ**. *Implementation of the SU(2) Hamiltonian Symmetry for the DMRG Algorithm*, https://arxiv.org/abs/1003.1919
- **SIMONE MONTANGERO**. *Introduction to Tensor Network Methods Numerical Simulations of Low-Dimensional Many-Body Quantum Systems*, https://www.amazon.es/Introduction-Tensor-Network-Methods-lowdimensional/dp/3030014088
- **PIETRO SILVI** ; **ENRIQUE RICO** ; **TOMMASO CALARCO** ; **SIMONE MONTANGERO**. *Lattice Gauge Tensor Networks*, https://arxiv.org/abs/1404.7439?context=hep-lat
- **RAFFAEL GAWATZ**. *Matrix Product State Based Algorithms for Ground States and Dynamics*, https://www.nbi.ku.dk/english/theses/rnasters-theses/raffael-gawatz/RGawatz_Msc.pdf

- **CHU GUO** ; **DARIO POLETTI**. *Matrix Product States with adaptive global symmetries*, https://arxiv.org/abs/1905.01609
- **A. WEICHSELBAUM**. *Non-abelian symmetries in tensor networks: a quantum symmetry space approach*, https://arxiv.org/abs/1202.5664
- **L. TAGLIACOZZO** ; **THIAGO. R. DE OLIVEIRA** ; **S. IBLISDIR** ; **J. I. LATORRE**. *Scaling of entanglement support for Matrix Product States*, https://arxiv.org/abs/0712.1976
- **DEWOLF NICOLAS**. *Spatial Symmetries and Symmetry Breaking with Matrix Product States*, https://libstore.ugent.be/fulltxt/RUG01/002/782/900/RUG01-002782900_2019_0001_AC.pdf
- **D. PÉREZ-GARCÍA** ; **M.M. WOLF** ; **M. SANZ** ; **F. VERSTRAETE** ; **J.I. CIRAC**. *String order and symmetries in quantum spin lattices*, https://arxiv.org/abs/0802.0447
- **SUKHWINDER SINGH** ; **ROBERT N. C. PFEIFER** ; **GUIFRÉ VIDAL**. *Tensor network decompositions in the presence of a global symmetry*, https://arxiv.org/abs/0907.2994
- **SUKHWINDER SINGH**. *Tensor network states and algorithms in the presence of a global SU(2) symmetry*, https://link.aps.org/doi/10.1103/PhysRevB.86.195114
- **SUKHWINDER SINGH** ; **ROBERT N. C. PFEIFER** ; **GUIFRE VIDAL**. *Tensor network states and algorithms in the presence of a global U(1) symmetry*, https://link.aps.org/doi/10.1103/PhysRevB.83.115125
- **SUKHBINDER SINGH**. *Tensor Network States and Algorithms in the presence of Abelian and non-Abelian Symmetries*, https://arxiv.org/abs/1203.2222
- **L. TAGLIACOZZO** ; **A. CELL** ; **M. LEWENSTEIN**. *Tensor Networks for Lattice Gauge Theories with Continuous Groups*, https://arxiv.org/abs/1405.4811
- **P. SILVI** ; **F. TSCHIRSICH** ; **M. GERSTER** ; **J. JÜNEMANN** ; **D. JASCHKE** ; **M. RIZZI** ; **S. MONTANGERO**. *The Tensor Networks Anthology: Simulation techniques for many-body quantum lattice systems*, https://arxiv.org/abs/1710.03733
- **SEBASTIAN PAECKELA** ; **THOMAS KÖHLERA** ; **ANDREAS SWOBODAC** ; **SALVATORE R. MANMANAA** ; **ULRICH**. *Time-evolution methods for matrix-product states*, https://arxiv.org/pdf/1901.05824

- **ROMÁN ORÚS** ; **SAMUEL MUGEL** ; **ENRIQUE LIZASO**. *Quantum computing for finance: overview and prospects*, https://www.researchgate.net/publication/331307552_Quantum_computing_fo r finance_Overview and_prospects
- **CHENFENG CA** ; **ZHENG AN** ; **SHI-YAO HOU** ; **D. L. ZHOU** ; **BEI ZENG**. *Quantum imaginary time evolution steered by reinforcement learning*, https://www.nature.com/articles/s42005-022-00837-y
- **JOHANNES JAKOB MEYER** ; **MARIAN MULARSKI** ; **ELIES GIL-FUSTER** ; **ANTONIO ANNA MELE** ; **FRANCESCO ARZANI** ; **ALISSA WILMS** ; **JENS EISERT**. *Exploiting symmetry in variational quantum machine learning*, https://ui.adsabs.harvard.edu/abs/2022arXiv220506217M/abstract
- **L. TAGLIACOZZO** ; **G. VIDA**. *Entanglement renormalization and gauge symmetry*, https://arxiv.org/abs/1007.4145

- **SCHOLLWÖCKC** ; **CLAUDIUS HUBIG**. *Time-evolution methods for matrix-product states*, https://arxiv.org/pdf/1901.05824
- **ROBERT N. C. PFEIFER**. *Symmetry-Protected Local Minima in Infinite DMRG*, https://arxiv.org/abs/1505.06266
- **FRED GLOVER** ; **GARY KOCHENBERGER** ; **YU DU**. *Quantum Bridge Analytics I: A Tutorial on Formulating and Using QUBO Models*, https://arxiv.org/pdf/1811.11538
- **GEOFFREY G CHU**. *Improving Combinatorial Optimization*, https://minerva-access.unimelb.edu.au/handle/11343/36679
- **MARIO MOTTA** ; **CHONG SUN** ; **ADRIAN T. K. TAN** ; **MATTHEW J. O'ROURKE** ; **ERIKA YE** ; **AUSTIN J. MINNICH** ; **FERNANDO G. S. L. BRANDÃO** ; **GARNET KIN-LIC CHAN**. *Determining eigenstates and thermal states on a quantum computer using quantum imaginary time evolution*, https://arxiv.org/abs/1901.07653